# EUROPEAN PATENT APPLICATION

(11) **EP 4 764 799 A1**
(43) Date of publication of application: **24.06.2026**
(21) Application number: 25829907.2
(22) Date of filing: 17.06.2025
(51) Int. Cl.: G06F 3/0481

(54) **APPLICATION STARTUP METHOD IN LOCKED SCREEN STATE, ELECTRONIC DEVICE, AND STORAGE MEDIUM**

(30) Priority: 20.06.2024 CN 202410808333
(71) Applicant: HUAWEI TECHNOLOGIES CO., LTD., Shenzhen, Guangdong 518129 (CN)
(72) Inventor: YAO, Ruijiang, Shenzhen, Guangdong 518129 (CN); DING, Chenpeng, Shenzhen, Guangdong 518129 (CN)
(74) Representative: Pfenning, Meinig & Partner mbB
(86) International application number: PCT/CN2025/101511
(87) International publication number: WO 2025/261354

(57) **Abstract**

This application provides a method for starting an application in a lock-screen state, an electronic device, and a storage medium. An electronic device displays a first lock screen picture, where the first lock screen picture includes a first icon of a first application. The electronic device receives a first slide operation, where the first slide operation is performed on the first icon. The electronic device displays a first window of the first application in response to the first slide operation. Picture content in the first application is displayed in the first window. In the method, when the first application is started in a lock-screen state, the electronic device may create the first window of the first application, and display, in the first window of the first application, content in the first application, so that a user previews application content of the first application in advance without unlocking the electronic device.

## Description

This application claims priority to Chinese Patent Application No. 202410808333.0, filed with the China National Intellectual Property Administration on June 20, 2024 and entitled "METHOD FOR STARTING APPLICATION IN LOCK-SCREEN STATE, ELECTRONIC DEVICE, AND STORAGE MEDIUM", which is incorporated herein by reference in its entirety.

### TECHNICAL FIELD

This application relates to the field of terminal technologies, and in particular, to a method for starting an application in a lock-screen state, an electronic device, and a storage medium.

### BACKGROUND

With development of terminal technologies, an increasing quantity of applications are installed on an electronic device, and a user may experience different functions by using the applications installed on the electronic device.

To reduce power consumption of the electronic device and reduce occurrences of accidental touch, when the electronic device has not been operated for a long time, the electronic device may enter a lock-screen state. After the electronic device enters the lock-screen state, the user may unlock the electronic device in one or more of the following manners: a fingerprint, a face image, a voiceprint, a password, and the like. When the electronic device is in the lock-screen state, the user may perform an operation on a lock screen picture to quickly start an application without unlocking the electronic device.

Currently, when the user performs an operation on a lock screen interface to quickly start an application, the electronic device may play motion effect on the lock screen picture based on a fixed picture, to improve visual experience of the user. However, the fixed picture cannot represent actual preview effect in the application, leading to poor user experience.

### SUMMARY

This application provides a method for starting an application in a lock-screen state, an electronic device, and a storage medium. When a first application is started in a lock-screen state, an electronic device may create a first window of the first application, and display, in the first window of the first application, content in the first application, so that a user previews application content of the first application in advance without unlocking the electronic device.

According to a first aspect, this application provides a method for starting an application in a lock-screen state. The method includes: An electronic device displays a first lock screen picture, where the first lock screen picture includes a first icon of a first application. The electronic device receives a first slide operation, where the first slide operation is performed on the first icon. The electronic device displays a first window of the first application in response to the first slide operation, where picture content in the first application is displayed in the first window.

For example, when the first application is a payment application, a user may quickly start the payment application in a lock-screen state, with a payment application window displayed. A payment code may be displayed in the payment application window. In this way, the user can quickly show the payment code in the payment application without unlocking, to perform a quick payment operation or the like. This facilitates a user operation.

For example, when the first application is a scan application, a user may quickly start the scan application in a lock-screen state, with a scan application window displayed. A scan page may be displayed in the scan application window. In this way, the user can quickly start the scan application without unlocking, and scan a picture, for example, a two-dimensional code, through the scan application, to perform a quick payment operation or the like. This facilitates a user operation.

For example, when the first application is a camera application, a user may quickly start the camera application in a lock-screen state, with a camera application window displayed. Camera preview content may be displayed in the camera application window. In this way, the user can start the camera application without unlocking, and perform a photographing operation, a video recording operation, or the like through the camera application. This facilitates a user operation.

For example, when the first application is a notepad application, a user may quickly start the notepad application in a lock-screen state, with a notepad application window displayed. Note content may be displayed in the notepad application window. In this way, the note content of the notepad application can be quickly displayed without unlocking by the user. This facilitates a user operation.

In the method, when the first application is started in the lock-screen state, the electronic device may create the first window of the first application, and display, in the first window of the first application, content in the first application, so that the user previews application content of the first application in advance without unlocking the electronic device.

With reference to the first aspect, in a possible implementation, that the electronic device displays the first lock screen picture specifically includes: The electronic device displays the first lock screen picture in a lock screen window. That the electronic device displays the first window of the first application specifically includes: The electronic device displays the first window of the first application above the lock screen window.

In this way, when the first application is quickly started in the lock-screen state, the electronic device may additionally create the first window of the first application. In this way, the first window of the first application and the lock screen window are independent of each other and do not affect each other. When a lock screen application is closed, the first window of the first application still exists.

With reference to the first aspect, in a possible implementation, that the electronic device displays the first window of the first application in response to the first slide operation specifically includes: The electronic device determines a first slide distance based on the first slide operation performed on the first icon. The electronic device determines whether the first slide distance is greater than a preset distance. If the first slide distance is greater than the preset distance, the electronic device displays the first window of the first application.

Optionally, the first slide distance may be determined based on a distance, in a vertical direction, between an end position and an initial position of the first slide operation performed on the first icon. Optionally, the initial position may be a display position of the first icon.

For example, the display position of the first icon may be a position of a center point of the first icon. The display position of the first icon may alternatively be a display position of another point of the first icon, for example, a display position of any edge of the first icon, a display position of a point inside the first icon, or a display position of a point outside the first icon.

In the method, when a slide distance of the first icon is greater than the preset distance, the electronic device may create and display the first window of the first application.

With reference to the first aspect, in a possible implementation, the method further includes: If the first slide distance is less than the preset distance, the electronic device displays a second lock screen picture, where the second lock screen picture includes a second icon of the first application, and a size of the second icon is greater than a size of the first icon, or a size of the second icon is the same as a size of the first icon.

In the method, when a slide distance of the first icon is less than the preset distance, the electronic device may not create the first window of the first application, but continue to display an icon of the first application, for example, the second icon. The size of the second icon may be the same as or different from the size of the first icon. A display position of the second icon may be the same as or different from the display position of the first icon.

With reference to the first aspect, in a possible implementation, the display position of the second icon is different from the display position of the first icon, and the display position of the second icon is determined based on the first slide operation.

Optionally, the display position of the second icon may be determined based on the end position of the first slide operation for the first icon.

With reference to the first aspect, in a possible implementation, that the electronic device displays the first window of the first application specifically includes: The electronic device determines a first display position based on the first slide operation. The electronic device displays the first window of the first application based on the first display position.

Optionally, a display position of the first window may be determined based on the end position of the first slide operation for the first icon.

Optionally, that the electronic device displays the first window based on the first display position may mean that the first display position is a display position of a vertex of the first window, or may be a display position of a point on an edge of the first window, or may be a display position of a point inside the first window, or may be a display position of a point outside the first window instead of a display position on the first window or a display position of a point inside the first window. A manner of displaying the first window based on the first display position is not limited in this application.

This can ensure that a display position of the first window varies with a display position of a finger of the user, to achieve responsiveness.

With reference to the first aspect, in a possible implementation, after the electronic device displays the first window of the first application, the method further includes: The electronic device continues to receive the first slide operation, where the first slide operation is performed on the first window. The electronic device determines a second slide distance based on the first slide operation performed on the first window. The electronic device determines whether the second slide distance is greater than the preset distance. If the second slide distance is greater than the preset distance, the electronic device displays the first window of the first application, where picture content in the first application is displayed in the first window.

After the electronic device creates and displays the first window of the first application, the user may continue to perform the first slide operation on the first window.

Optionally, a slide direction of the first slide operation for the first window may be the same as a slide direction of the first slide operation for the first icon, or may be opposite to a slide direction of the first slide operation for the first icon.

Optionally, the second slide distance may be based on a distance, in the vertical direction, between an end position and an initial position of the first slide operation for the first window.

Optionally, a slide direction of the first slide operation for the first window may be the same as or different from a slide direction of the first slide operation for the first icon.

In the method, when the second slide distance of the first slide operation for the first window is greater than the preset distance, the electronic device may continue to display the first window of the first application. Before and after the first slide operation for the first window is received, a size of the first window may remain the same or vary, and a display position of the first window may remain the same or vary.

With reference to the first aspect, in a possible implementation, if the second slide distance is greater than the first slide distance, a size of the first window of the first application increases; or if the second slide distance is less than the first slide distance, a size of the first window of the first application decreases.

In this way, the size of the first window may vary with a slide distance, to achieve responsiveness.

With reference to the first aspect, in a possible implementation, after the electronic device displays the first window of the first application, the method further includes: The electronic device receives an unlock operation of a user. The electronic device displays the first window of the first application in full screen in response to the unlock operation, where picture content in the first application is displayed in the first window.

Optionally, the electronic device 100 may display the first window of the first application in full screen, or the electronic device 100 may not display the first window of the first application in full screen. Then the electronic device may receive the unlock operation of the user. Because the first window of the first application and the lock screen window are independent of each other, a display status of the first window of the first application is not affected by the lock screen window. Therefore, after unlocking, when the lock screen window is destroyed, the electronic device 100 may still continue to display the first window of the first application.

With reference to the first aspect, in a possible implementation, the electronic device destroys the lock screen window.

In this way, after the unlock operation is performed, the electronic device may destroy the lock screen window. To be specific, the lock screen application on the electronic device is closed, and no lock screen window exists on the electronic device. When the electronic device enters the lock-screen state again, the electronic device starts the lock screen application again, and creates and displays a lock screen window.

With reference to the first aspect, in a possible implementation, after the electronic device displays the first window of a first application, the method further includes: After detecting that the first slide operation ends, the electronic device displays the first window of the first application in full screen, where picture content in the first application is displayed in the first window.

In this way, after the user stops an operation for the first window, to be specific, stops the first slide operation for the first window, for example, the user releases the finger, the electronic device may automatically display the first window of the first application in full screen.

With reference to the first aspect, in a possible implementation, the first window of the first application is located at an upper layer of the lock screen window.

In this way, after the user stops an operation for the first window, to be specific, stops the first slide operation for the first window, for example, the user releases the finger, the lock screen window still exists on the electronic device, and the first window is located at the upper layer of the lock screen window.

With reference to the first aspect, in a possible implementation, before the electronic device displays the first window of the first application in full screen, the method further includes: The electronic device gradually enlarges the first window of the first application until the first window of the first application is displayed in full screen.

In this way, after the user stops an operation for the first window, to be specific, stops the first slide operation for the first window, or after the user performs the unlock operation, the first window may be gradually enlarged, to naturally switch to full-screen display.

With reference to the first aspect, in a possible implementation, after the electronic device displays the first window of the first application in full screen, the method further includes: The electronic device receives an operation of a user for the first window of the first application. The electronic device displays the lock screen window in response to receiving the operation of the user for the first window of the first application, where the first lock screen picture is displayed in the lock screen window.

In this way, when the electronic device is in the lock-screen state, after the electronic device displays the first window in full screen, if the electronic device may receive a user operation to stop displaying the first window, the electronic device may continue to display the lock screen window in full screen.

With reference to the first aspect, in a possible implementation, after the electronic device displays the lock screen window, the method further includes: The electronic device destroys the first window of the first application, or displays the first window of the first application at a lower layer of the lock screen window.

Optionally, the first window may be destroyed or continue to exist on the electronic device. When the first window continues to exist on the electronic device, the lock screen window is located at an upper layer of the first window.

With reference to the first aspect, in a possible implementation, when the electronic device is in an unlocked state, after the electronic device displays the first window in full screen, if the electronic device may receive a user operation to stop displaying the first window, the electronic device may display a desktop. In this case, a desktop window is located at an upper layer of the first window.

According to a second aspect, this application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to any one of the possible implementations of the first aspect.

According to a third aspect, this application provides a computer-readable storage medium, including instructions. When the instructions are run on an electronic device, the electronic device is enabled to perform the method according to any one of the possible implementations of the first aspect.

According to a fourth aspect, this application provides a computer program product. The computer program product may include computer instructions. When the computer instructions are run on an electronic device, the electronic device is enabled to perform the method according to any one of the possible implementations of the first aspect.

According to a fifth aspect, this application provides a chip. The chip is used in an electronic device. The chip includes one or more processors. The processor is configured to invoke computer instructions, to enable the electronic device to perform the method according to any one of the possible implementations of the first aspect.

For beneficial effects of the second aspect to the fifth aspect, refer to the descriptions of the beneficial effects of the first aspect. Details are not described herein again.

### BRIEF DESCRIPTION OF DRAWINGS

FIG. 1(a) to FIG. 1(d) are a diagram of playing, by an electronic device 100, startup motion effect for a camera application on a lock screen picture;
FIG. 2 is a diagram of a structure of an electronic device 100;
FIG. 3 is a block diagram of a software structure of an electronic device 100 according to an embodiment of this application;
FIG. 4A and FIG. 4B are diagrams of UIs on which an electronic device enters a lock-screen state from a non-lock-screen state;
FIG. 4C is a schematic flowchart of a method for displaying a lock screen picture by an electronic device 100;
FIG. 4D and FIG. 4E are diagrams of display layers of application windows on an electronic device 100 before the electronic device 100 enters a lock-screen state and after the electronic device 100 enters the lock-screen state;
FIG. 5A to FIG. 5I are diagrams of UIs on which an electronic device 100 quickly starts a camera application on a lock screen picture;
FIG. 5J-1 to FIG. 5J-4 are a schematic flowchart of a method for receiving, by an electronic device 100, a user operation and starting a first application when the electronic device 100 is in a lock-screen state;

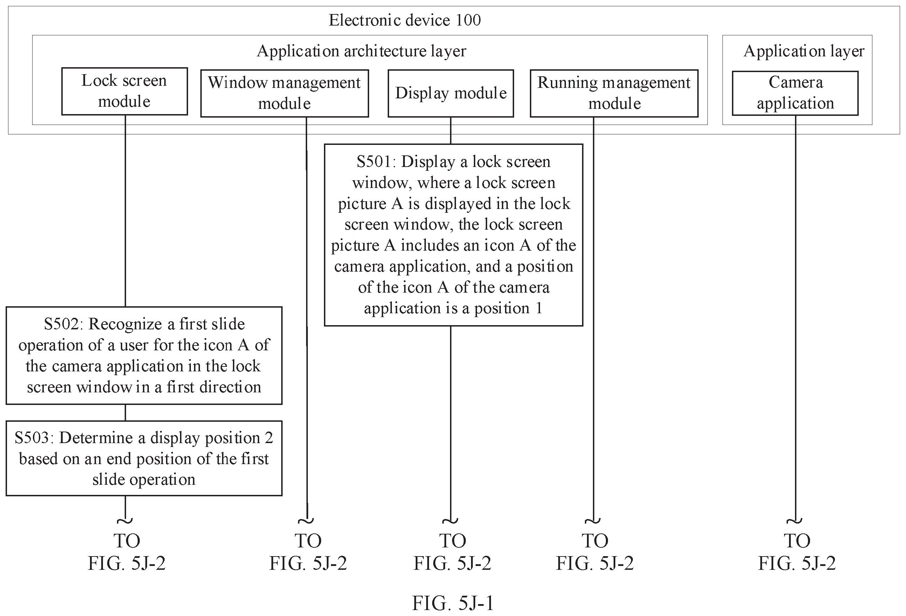

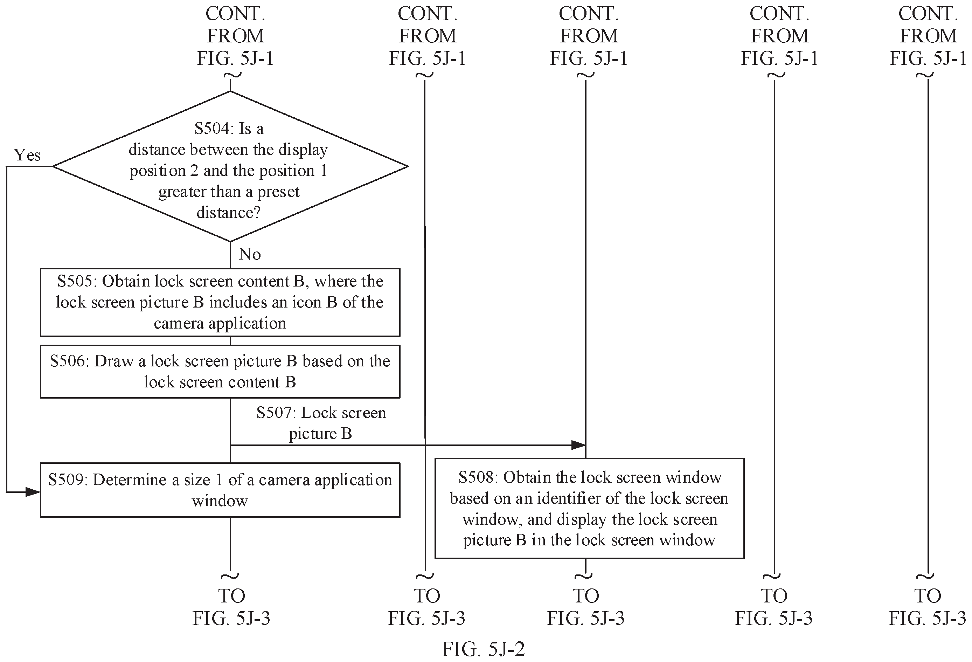

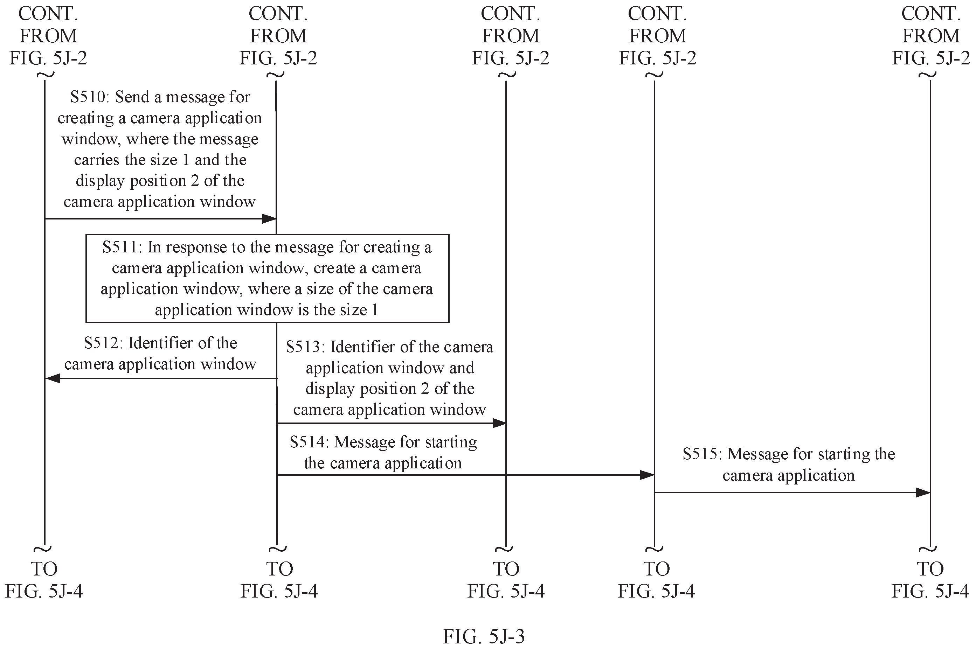

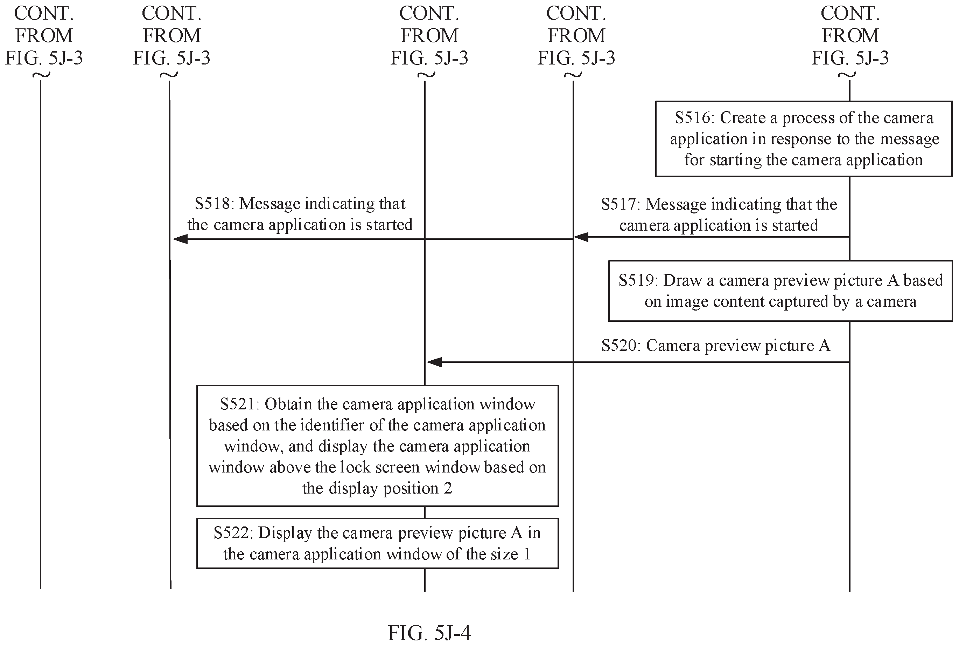

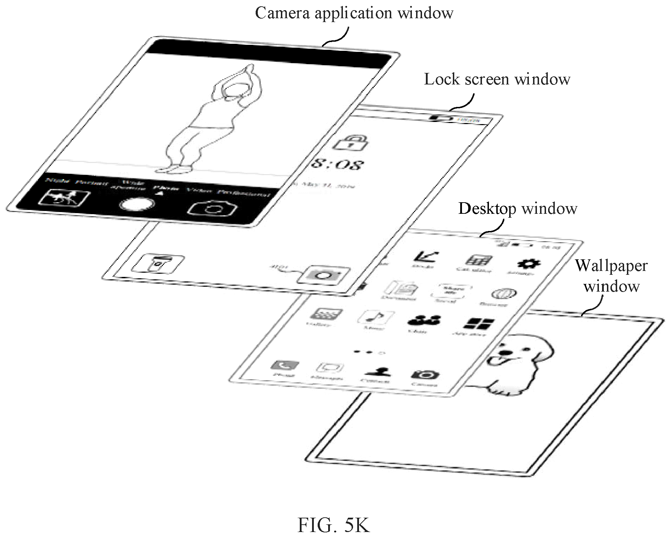

FIG. 5K is a diagram of display layers of application windows on an electronic device 100 when a camera application is started and a camera application window is displayed after the electronic device 100 enters a lock-screen state;
FIG. 6A-1 and FIG. 6A-2 are a diagram of UIs on which a camera application window moves with movement of a finger in a first direction;

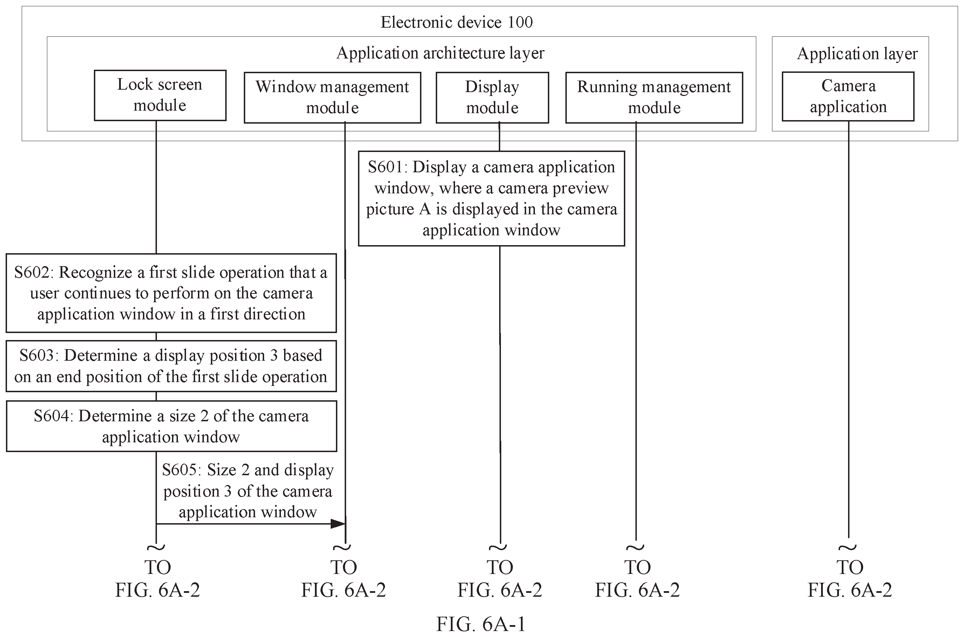

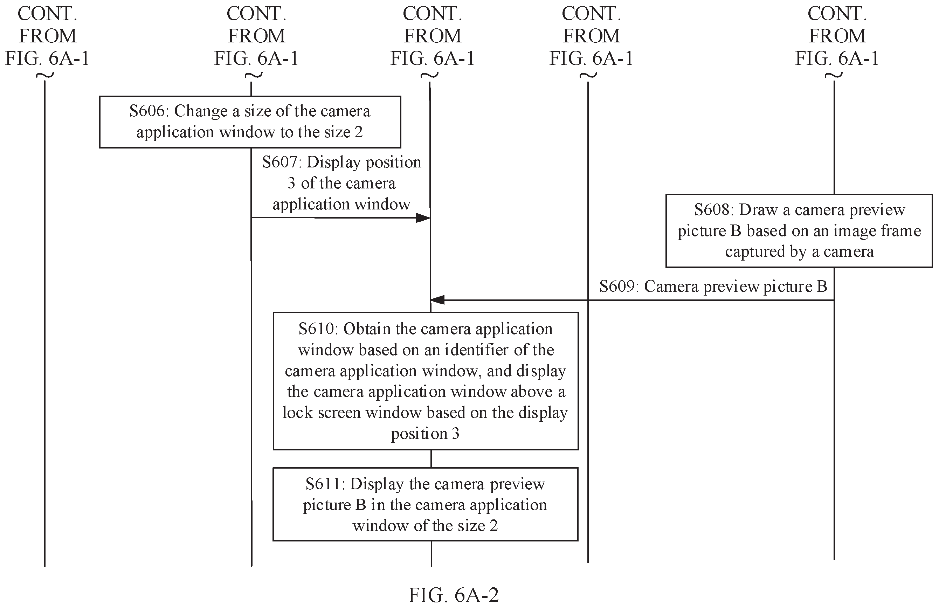

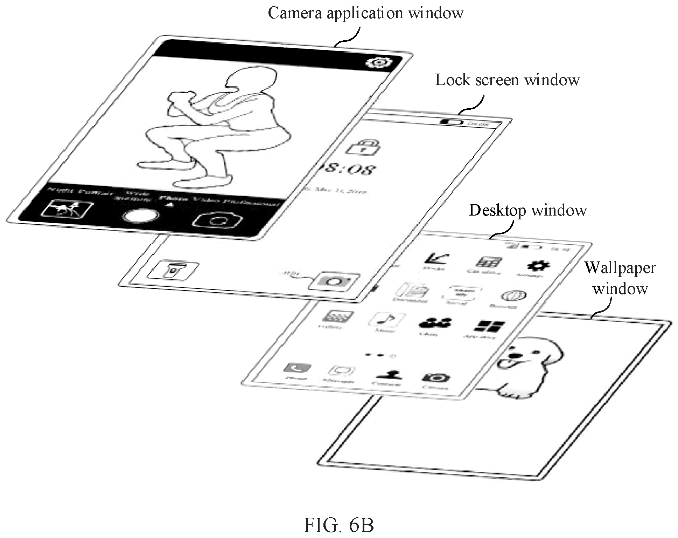

FIG. 6B is a diagram of display layers of application windows on an electronic device 100 after the electronic device 100 enters a lock-screen state and a display position of a camera application window moves with a position of a finger of a user;

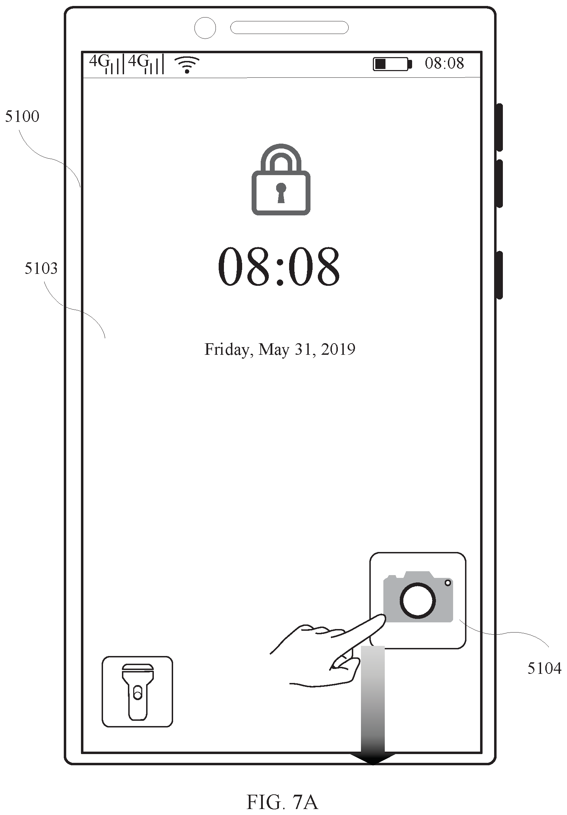

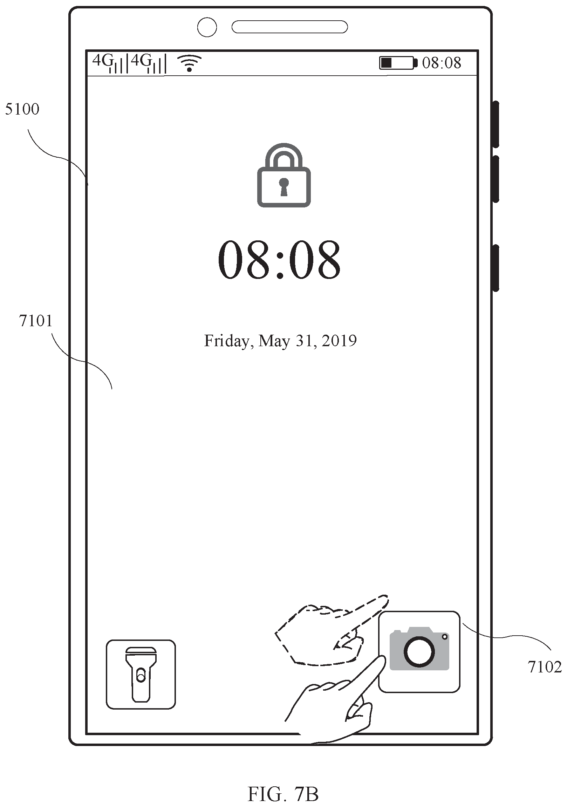

FIG. 7A and FIG. 7B are diagrams of UIs on which an electronic device 100 continues to display lock screen content when a user slides an icon of a camera application in a second direction on a lock screen interface;

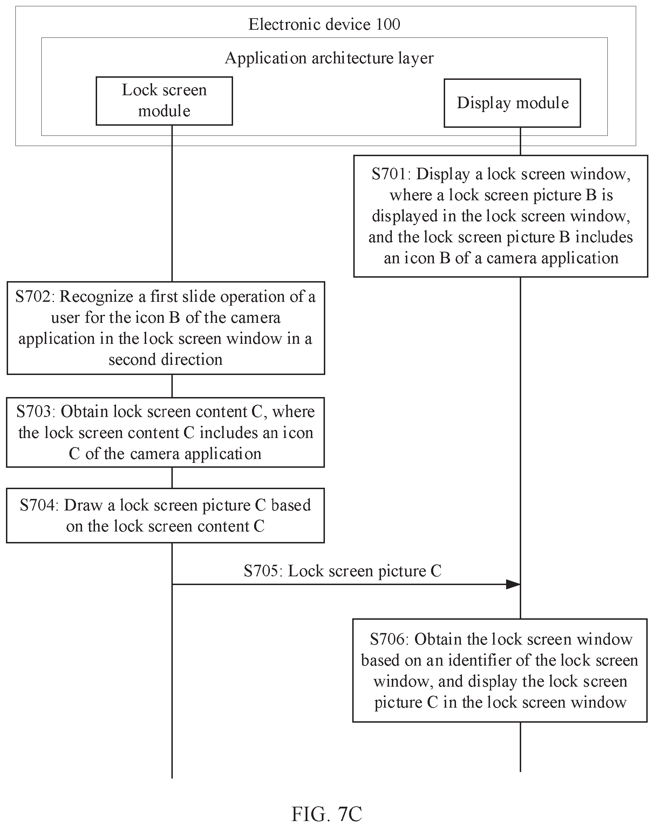

FIG. 7C is a schematic flowchart of a method for continuing, by an electronic device 100, to display lock screen content when a user slides an icon of a camera application in a second direction on a lock screen interface;

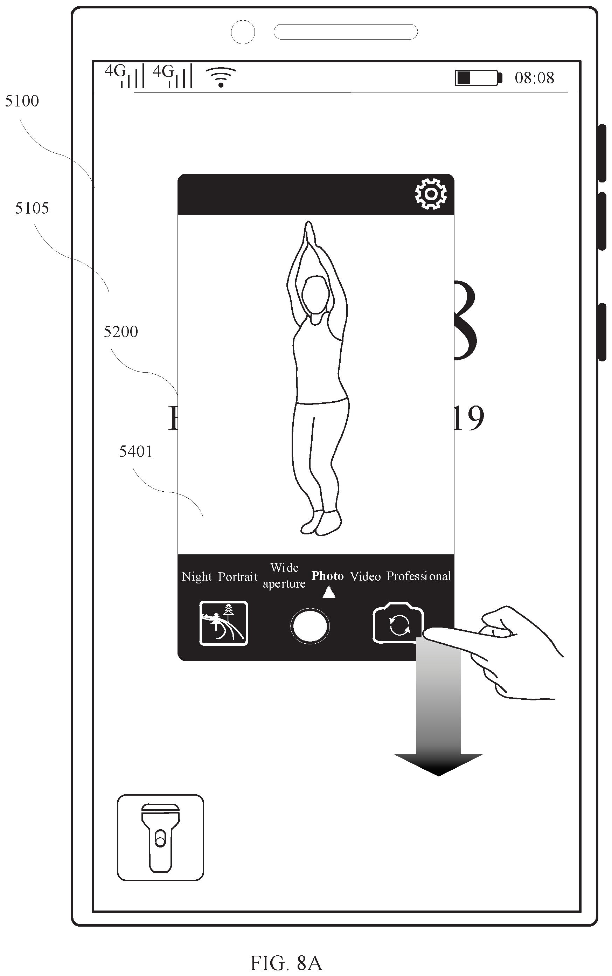

FIG. 8A to FIG. 8C are diagrams of UIs on which an electronic device 100 continues to display an application window of a camera application or stops displaying an application window of a camera application when a user slides the application window in a second direction on a lock screen interface;
FIG. 8D-1 and FIG. 8D-2 are a schematic flowchart of a method for continuing, by an electronic device 100, to display an application window of a camera application or stopping displaying an application window of a camera application when a user slides the application window in a second direction on a lock screen interface;

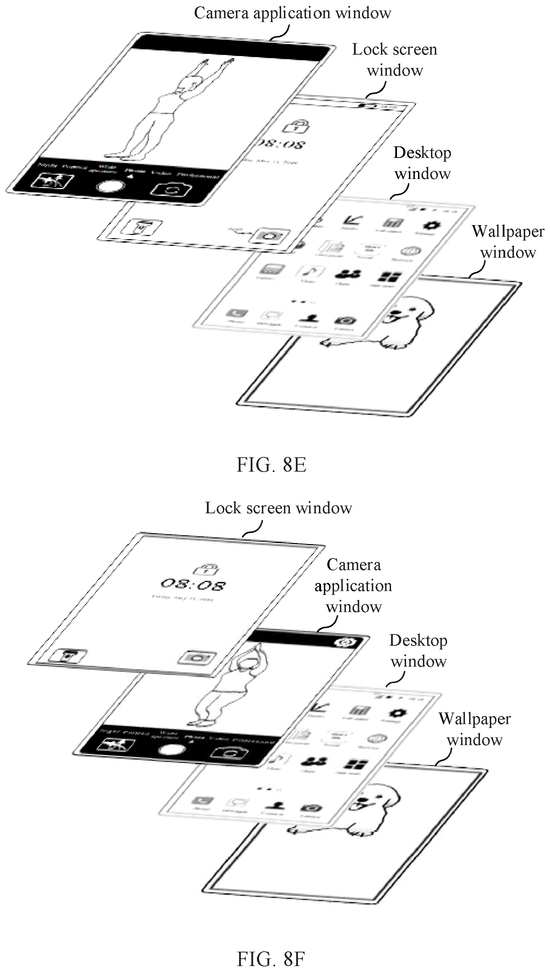

FIG. 8E to FIG. 8G are a group of diagrams of display layers of application windows on an electronic device 100;

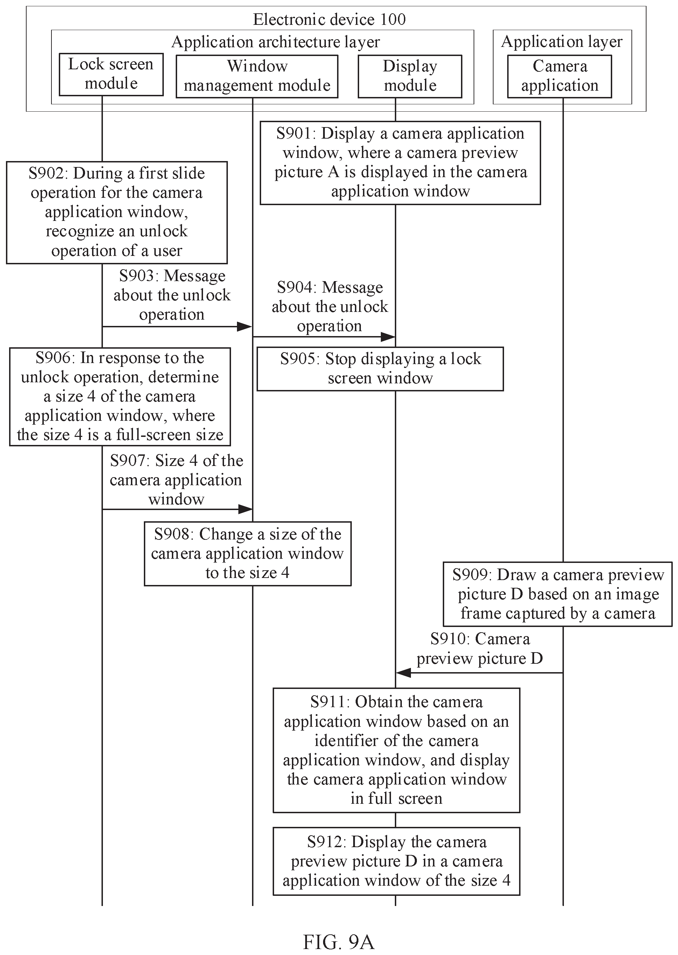

FIG. 9A is a schematic flowchart of a method for displaying, by an electronic device 100, an application window of a first application in full screen after a user unlocks the electronic device 100 before the electronic device 100 displays a camera application window in full screen;

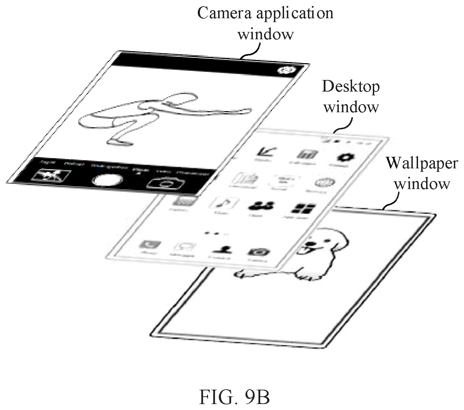

FIG. 9B is a diagram of display layers of application windows on an electronic device 100 after a user unlocks the electronic device 100 and the electronic device 100 displays an application window of a first application in full screen;

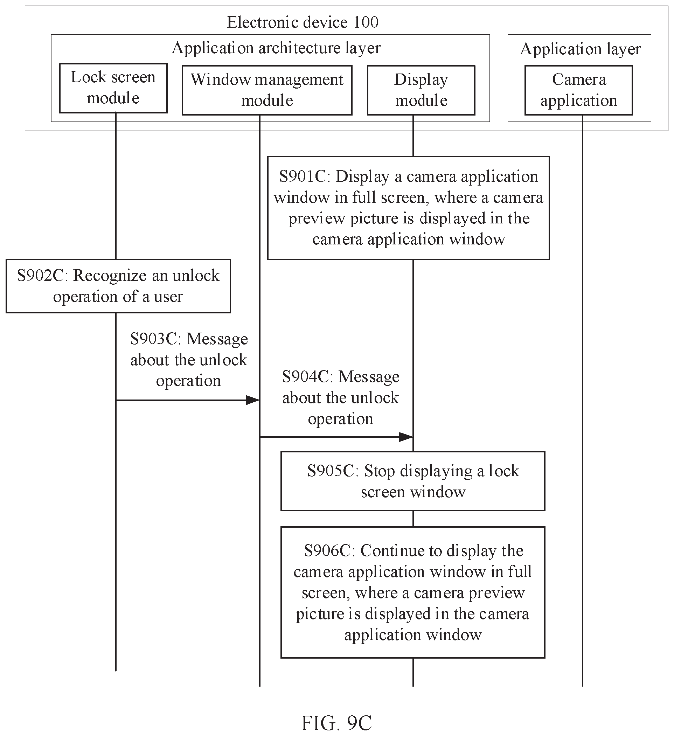

FIG. 9C is a schematic flowchart of a method for displaying, by an electronic device 100, an application window of a first application in full screen after a user unlocks the electronic device 100 after the electronic device 100 displays a camera application window in full screen;

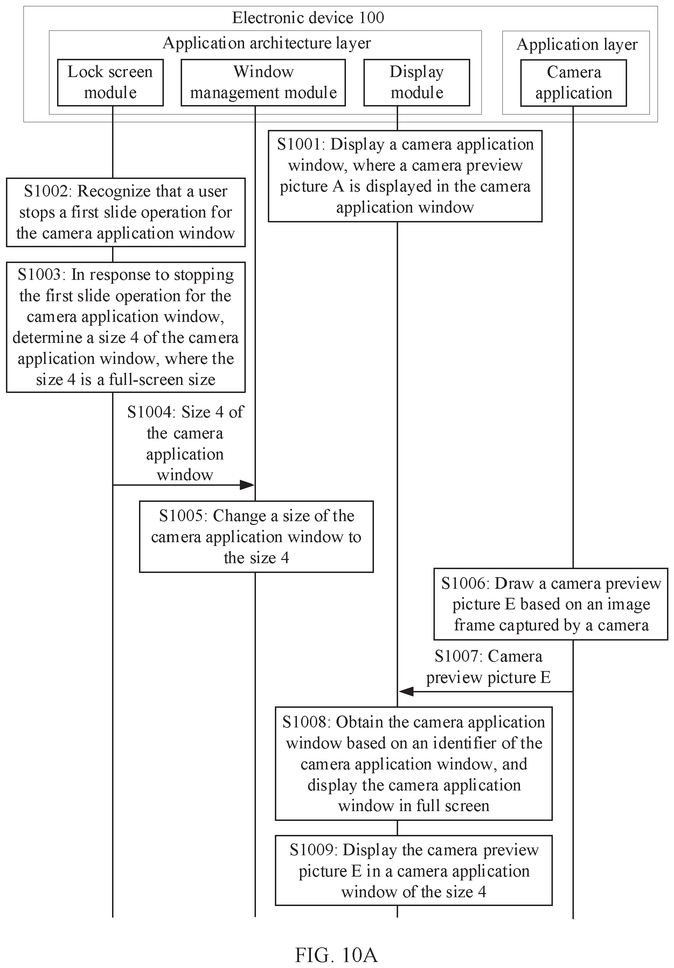

FIG. 10A is a schematic flowchart of a method for displaying, by an electronic device 100, an application window of a first application in full screen after a user ends a first slide operation when the electronic device 100 is in a lock-screen state;

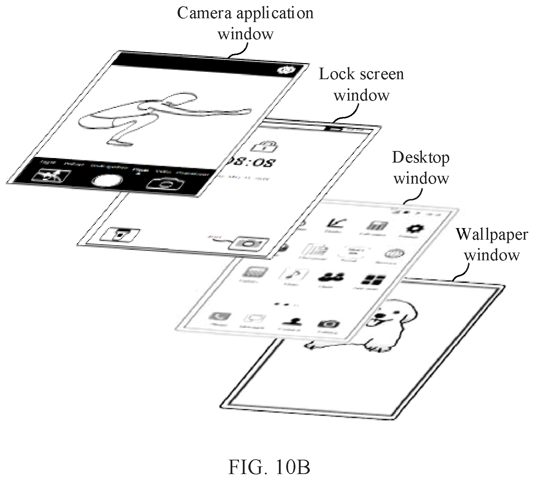

FIG. 10B is a diagram of display layers of application windows on an electronic device 100 after the electronic device 100 displays an application window of a first application in full screen when the electronic device 100 recognizes that a user stops a first slide operation for a camera application window;

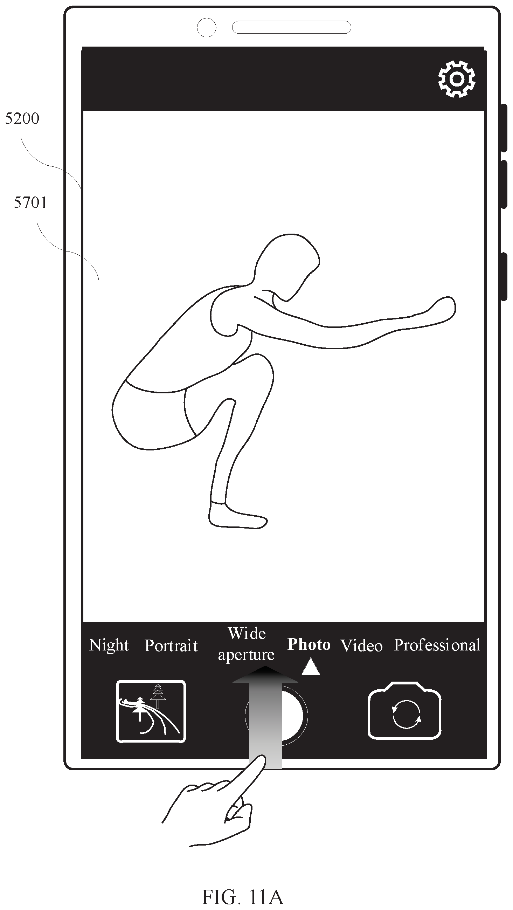

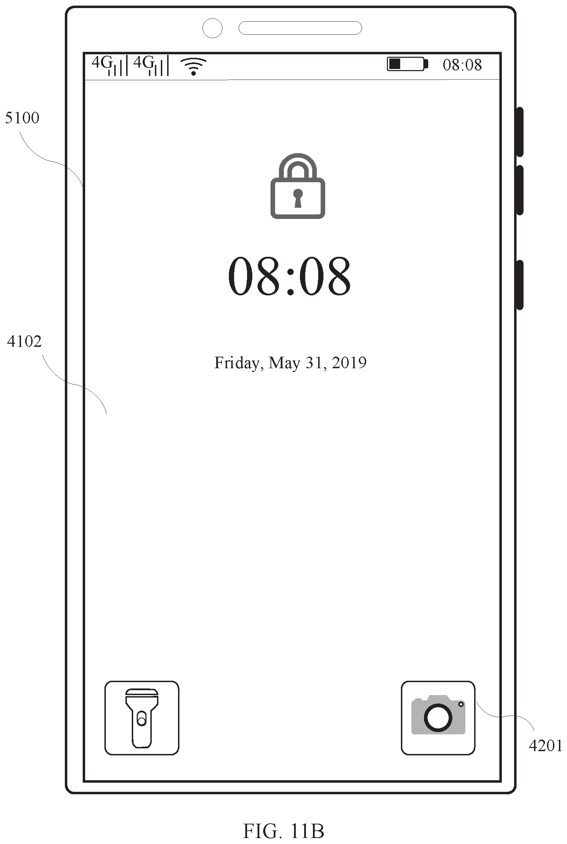

FIG. 11A and FIG. 11B are diagrams of a group of UIs on which an electronic device 100 receives a user operation and exits a camera application and the electronic device 100 displays a lock screen window in full screen;

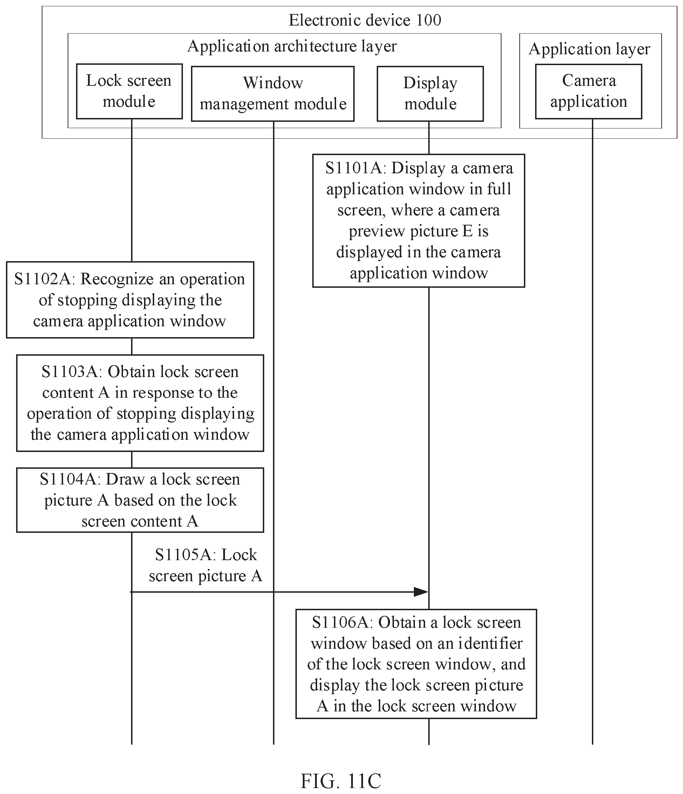

FIG. 11C is a schematic flowchart of a method for receiving, by an electronic device 100, a user operation and exiting a camera application and displaying, by the electronic device 100, a lock screen window in full screen;

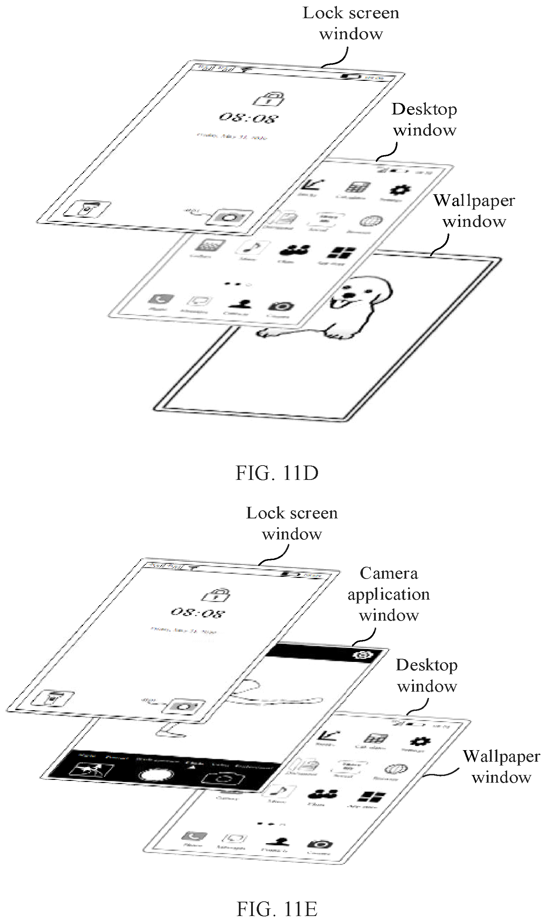

FIG. 11D and FIG. 11E are another group of diagrams of display layers of application windows on an electronic device 100;

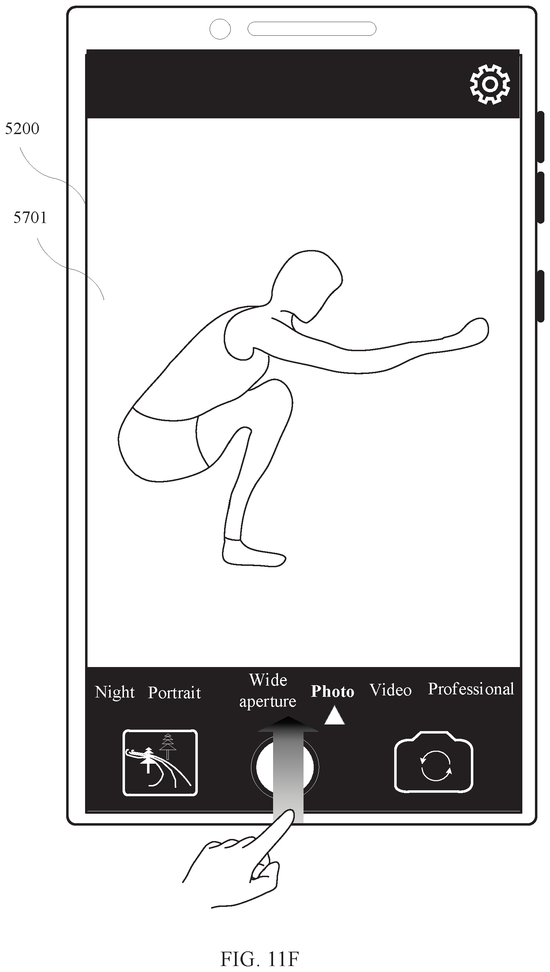

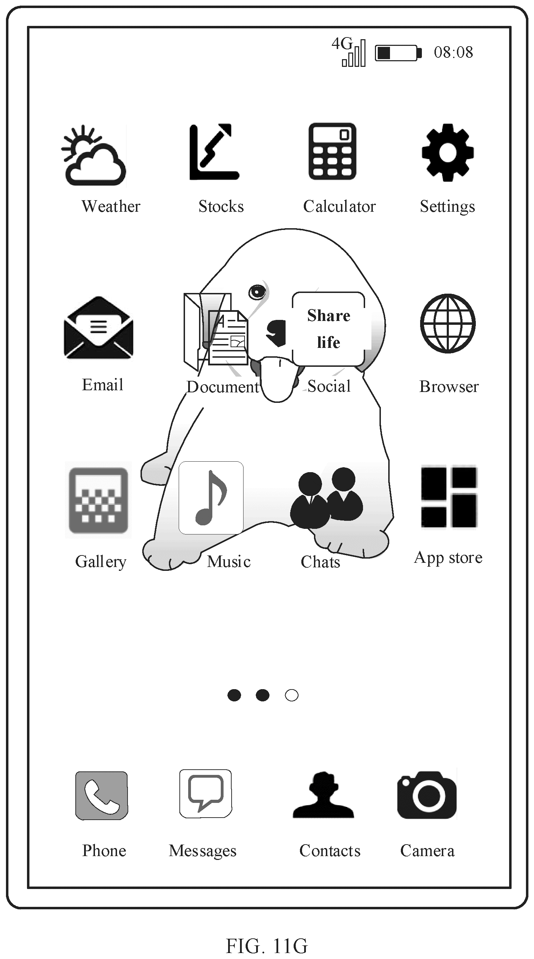

FIG. 11F and FIG. 11G are diagrams of another group of UIs on which an electronic device 100 receives a user operation and exits a camera application and the electronic device 100 displays a desktop window in full screen;

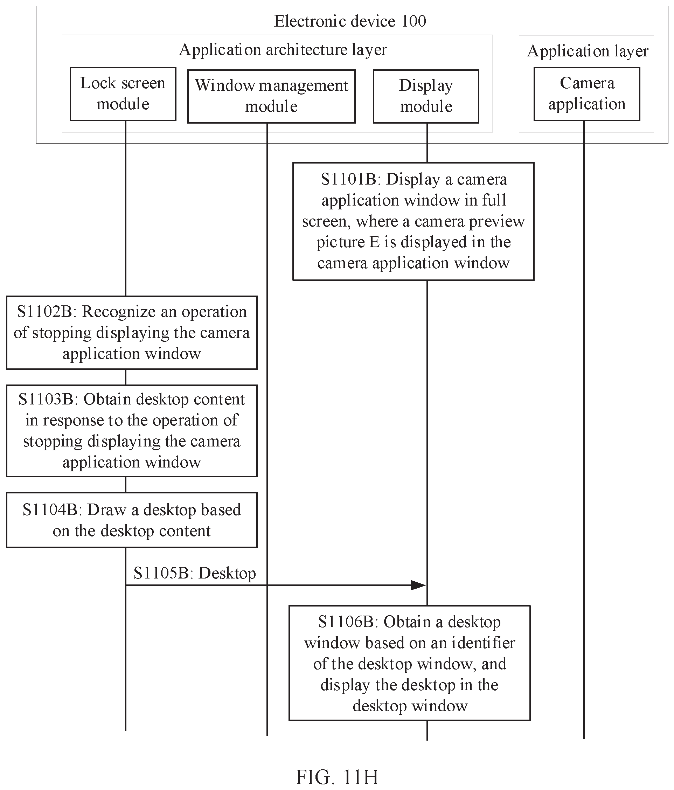

FIG. 11H is a schematic flowchart of another method for receiving, by an electronic device 100, a user operation and exiting a camera application and displaying, by the electronic device 100, a desktop window in full screen;

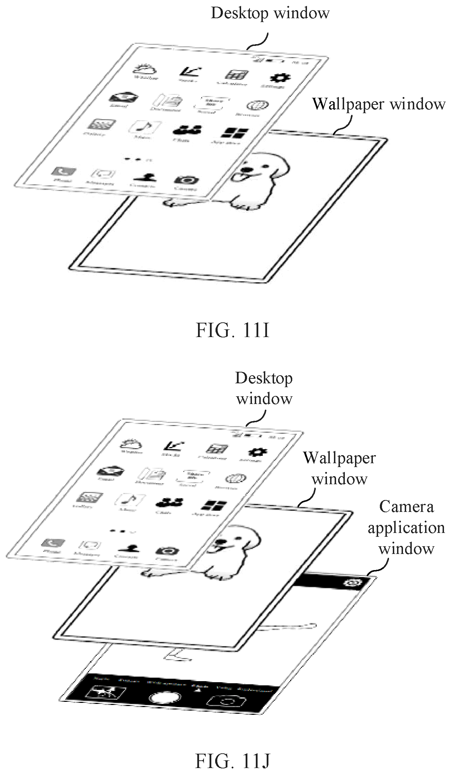

FIG. 11I and FIG. 11J are still another group of diagrams of display layers of application windows on an electronic device 100; and

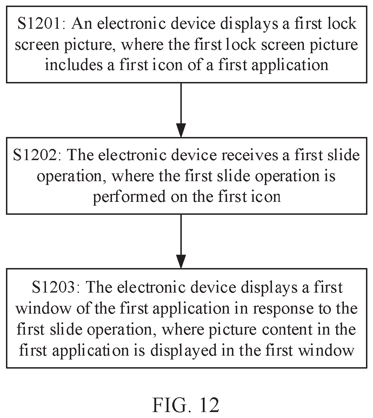

FIG. 12 is a schematic flowchart of a method for starting an application in a lock-screen state according to this application.

### DESCRIPTION OF EMBODIMENTS

The following clearly describes the technical solutions in embodiments of this application in detail with reference to the accompanying drawings. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language, for example, Java or an extensible markup language (extensible markup language, XML). The interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element, for example, text, an icon, a button, a menu, a tab, a text box, a dialog box, a status bar, a navigation bar, or a widget, that is displayed on a display of an electronic device.

When a user performs an operation on a lock screen picture to quickly start an application, to improve user experience, an electronic device 100 may obtain content in the application, and display the content in the application on the lock screen picture, so that the user can preview the content in the application in advance.

For example, an example in which a user quickly starts a camera application on a lock screen picture is used for description.

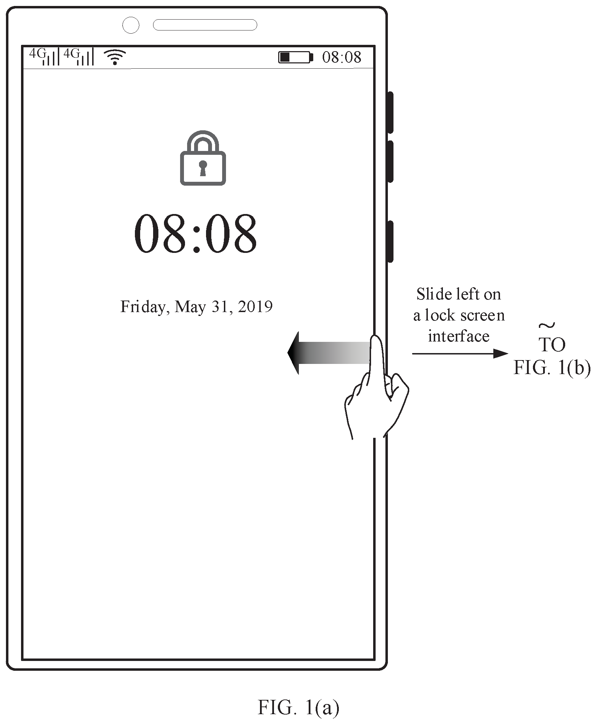

FIG. 1(a) to FIG. 1(d) are a diagram of playing, by an electronic device 100, startup motion effect for a camera application on a lock screen picture.

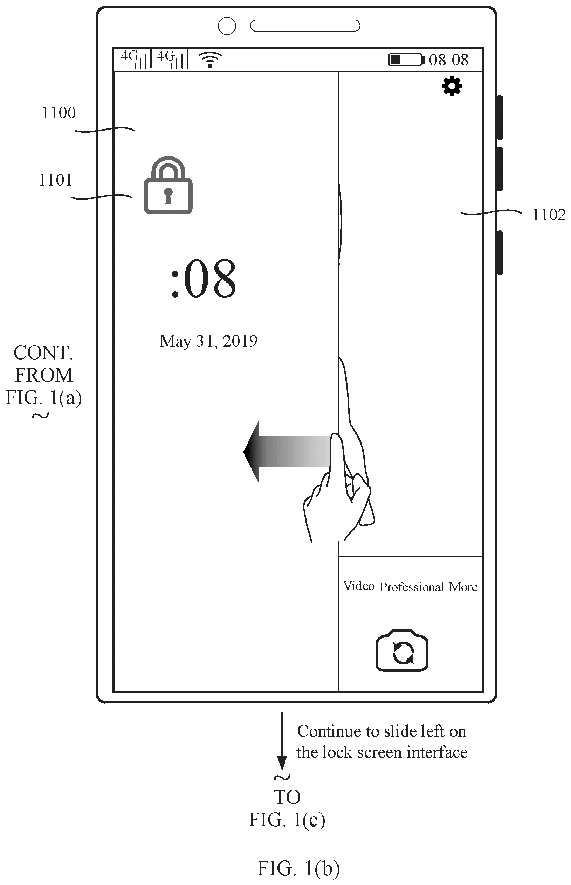

As shown in FIG. 1(a), the electronic device 100 displays a lock screen picture. The electronic device 100 may receive an operation performed by a user on the lock screen picture, for example, a slide-left operation. In response to the user operation, when a slide-left distance is less than a preset distance, the electronic device 100 may play startup motion effect for the camera application. For example, the electronic device 100 may display a user interface shown in FIG. 1(b).

As shown in FIG. 1(b), the electronic device 100 displays a user interface 1100, and the user interface 1100 includes a lock screen picture 1101 and a camera preview picture 1102 in the camera application. The electronic device 100 may receive an operation performed by the user on the user interface 1100, for example, an operation of continuing to slide left. In response to the user operation, when the slide-left distance is less than the preset distance, the electronic device 100 may continue to play startup motion effect for the camera application.

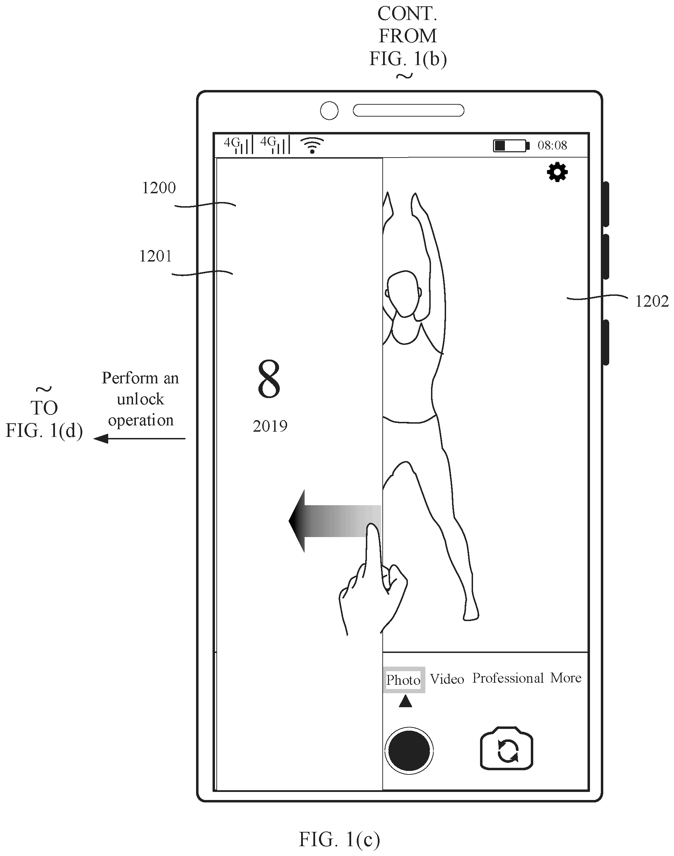

As shown in FIG. 1(c), the electronic device 100 displays a user interface 1200, and the user interface 1200 includes a lock screen picture 1201 and a camera preview picture 1202 in the camera application. The camera preview picture 1202 shown in FIG. 1(c) includes more content than the camera preview picture 1102 shown in FIG. 1(b).

As the user continues to slide left, an amount of content on a lock screen picture gradually decreases, and an amount of content on a camera preview picture in the camera application gradually increases. Then, when the slide-left distance is greater than the preset distance, the electronic device 100 stops displaying a lock screen picture, and displays a camera preview picture of the camera application in full screen.

The user interface 1100 shown in FIG. 1(b) and the camera preview picture shown in FIG. 1(c) may also be referred to as startup motion effect for the camera application.

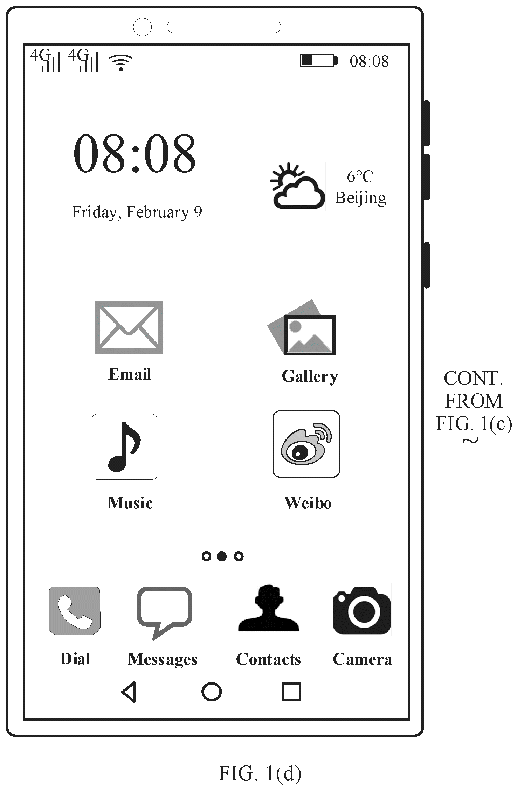

Because both the lock screen picture and the camera preview picture are displayed in one window, for example, both are displayed in a lock screen window, the electronic device 100 does not create a window of the camera application. If the user performs an unlock operation before the slide-left distance is greater than the preset distance, in response to the unlock operation, the electronic device 100 stops displaying the lock screen window, and stops playing the startup motion effect for the camera application. Because no window is created for the camera application, the electronic device 100 cannot display a camera preview picture of the camera application. The electronic device 100 may display a desktop by default, for example, display a desktop shown in FIG. 1(d).

That is, if the user performs an unlock operation when the electronic device 100 is playing startup motion effect for an application, the electronic device 100 displays the desktop instead of displaying a picture in the application. The user needs to tap an application icon of the camera application on the desktop. In response to the operation of tapping the application icon of the camera application, the electronic device 100 creates a window of the camera application, and displays a camera preview picture of the camera application in the window of the camera application.

The following describes a structure of an electronic device in this application.

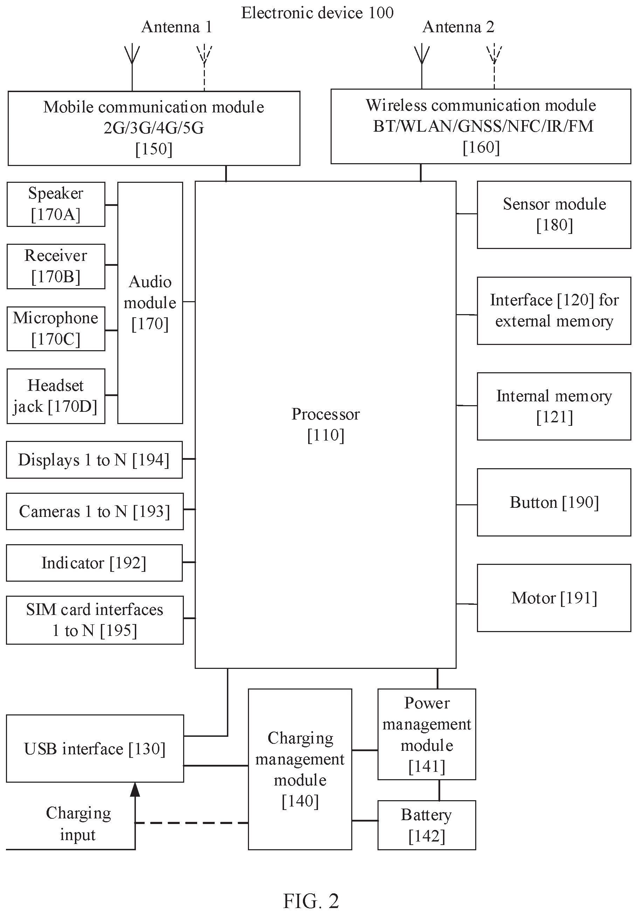

FIG. 2 is a diagram of an example hardware structure of an electronic device 100.

As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some examples, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

The USB interface 130 is an interface complying with a USB standard specification. The USB interface 130 may be used for connecting a charger to charge the electronic device 100, or may be configured to transmit data between the electronic device 100 and a peripheral device.

The charging management module 140 is configured to receive a charging input from a charger. The charger may be a wireless charger or a wired charger. While charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network.

The mobile communication module 150 may provide a solution applied to the electronic device 100 for wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering.

The display 194 is configured to display an image, a video, or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may further process other digital signals in addition to the digital image signal. For example, when the electronic device 100 selects a frequency, the digital signal processor is configured to perform Fourier transform on frequency energy.

The NPU is a neural-network (neural-network, NN) computing processor that quickly processes input information based on a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The interface 120 for external memory may be used for connecting an external memory card, for example, a microSD card, to extend a storage capability of the electronic device 100. The external memory card communicates with the processor 110 through the interface 120 for external memory, to implement a data storage function.

The internal memory 121 may be configured to store computer-executable program code. The executable program code includes instructions. The processor 110 runs the instructions stored in the internal memory 121 to perform various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like.

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or some functional modules of the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is used for connecting a wired headset.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as calling and data communication.

The electronic device 100 may be a mobile phone, a tablet computer, a notebook computer, a smartwatch, an ultra-mobile personal computer (ultra-mobile personal computer, UMPC), a netbook, a personal digital assistant (personal digital assistant, PDA), or the like. A specific type of the electronic device 100 is not limited in embodiments of this application.

A software system of the electronic device 100 may use a hierarchical architecture, an event-driven architecture, a microkernel architecture, a microservice architecture, or a cloud architecture. In embodiments of this application, an Android system with a hierarchical architecture is used as an example to describe a software structure of the electronic device 100.

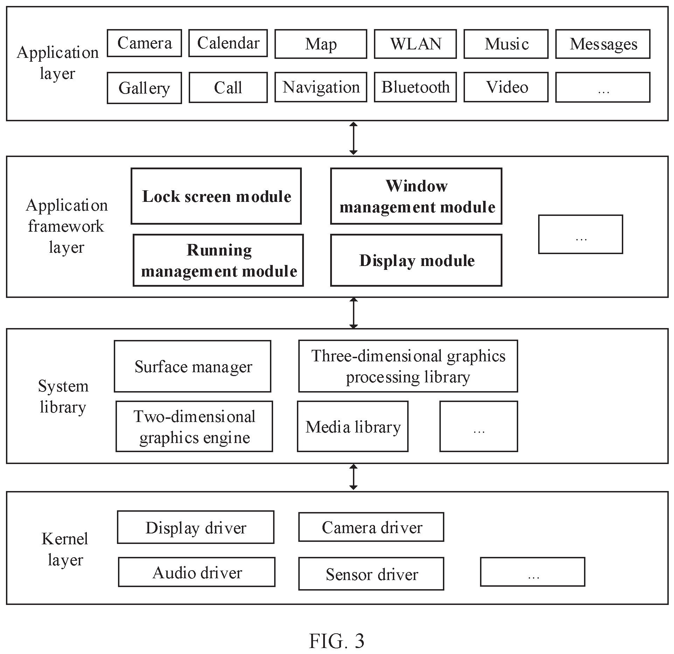

FIG. 3 is a block diagram of the software structure of the electronic device 100 according to an embodiment of this application.

In the hierarchical architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 3, the application framework layer may include **a lock screen module, a window management module, a running management module, a display module,** and the like.

**The window manager is configured to manage a window program. The window manager may obtain a size of a display screen, determine whether there is a status bar, lock a screen, take a screenshot, or the like. The window manager is further configured to manage a window of an application, for example, create the window of the application, change a size of the window of the application, or destroy the window of the application.**

**The lock screen module is configured to obtain lock screen content, draw a lock screen picture based on the lock screen content, and send the lock screen picture to the display module, so that the display module displays the lock screen picture in a window of a lock screen application.**

**The running management module is configured to manage a lifecycle of an application.**

**The display module is configured to display, in a window of an application, an application picture drawn by the application. For example, the display module may display, in the window of the lock screen application, the lock screen picture drawn by the lock screen module. The display module may further display, in a window of another application, an application picture drawn by the another application.**

**When both the lock screen module and the window management module are located at the application framework layer, interaction between the lock screen module and the window management module is in a same process, without IPC invocations, so that a response speed is higher.**

Optionally, the lock screen module may alternatively be located at the application layer. The lock screen module communicates with the window management module through an IPC message.

A core library includes two parts: a function that needs to be invoked in Java language and a core library of Android.

The application layer and the application framework layer run in a virtual machine. The virtual machine executes Java files at the application layer and the application framework layer as binary files. The virtual machine is configured to perform functions of object lifecycle management, stack management, thread management, security and exception management, garbage collection, and the like.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to a plurality of scenarios, the following describes in detail a method for starting an application in a lock-screen state in this application.

**Scenario 1: An electronic device 100 enters a lock-screen state and displays a lock screen picture.**

In some embodiments, when the electronic device has not been operated for a long time, to reduce power consumption of the electronic device and reduce occurrences of accidental touch, the electronic device may enter the lock-screen state. After the electronic device enters the lock-screen state, a user may unlock the electronic device in one or more of the following manners: a fingerprint, a face image, a voiceprint, a password, and the like.

After the electronic device 100 enters the lock-screen state, the electronic device 100 may display the lock screen picture.

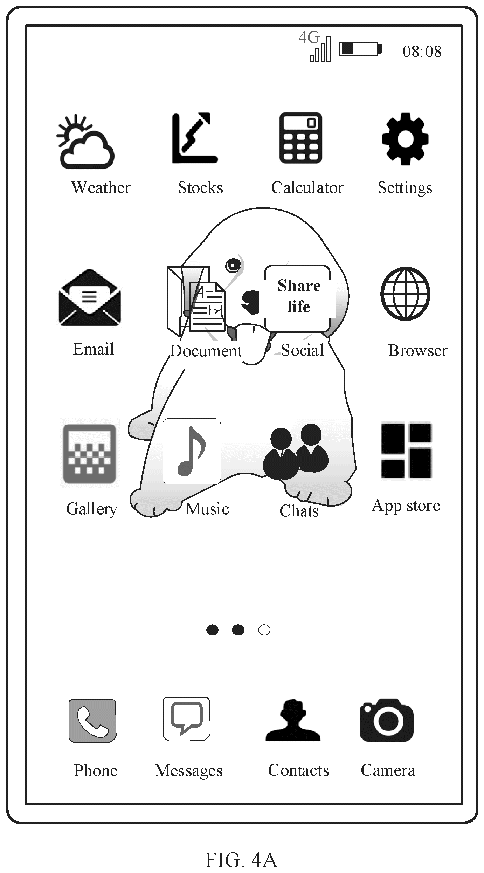

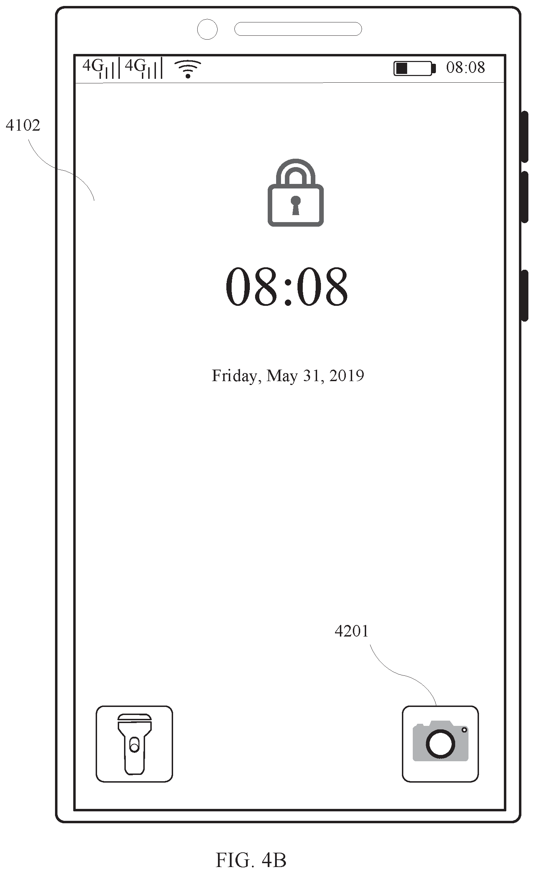

FIG. 4A and FIG. 4B are diagrams of UIs on which an electronic device enters a lock-screen state from a non-lock-screen state.

For example, as shown in FIG. 4A, before the electronic device 100 enters the lock-screen state, the electronic device 100 displays a desktop, and application icons of a plurality of applications are displayed on the desktop. As shown in FIG. 4B, the electronic device 100 further displays a wallpaper, for example, an image of a puppy.

After the electronic device 100 enters the lock-screen state, the electronic device 100 may display a lock screen picture 4102 shown in FIG. 4B. As shown in FIG. 4B, icons of applications, for example, an icon of a flashlight application and an icon 4201 of a camera application, are displayed on the lock screen picture 4102. The user may quickly start a corresponding application by using an icon of the application on the lock screen picture 4102 without unlocking the electronic device 100. For example, the user may quickly start the camera application by using the icon 4201 of the camera application without unlocking the electronic device 100.

In some embodiments, the electronic device 100 may alternatively not display a wallpaper.

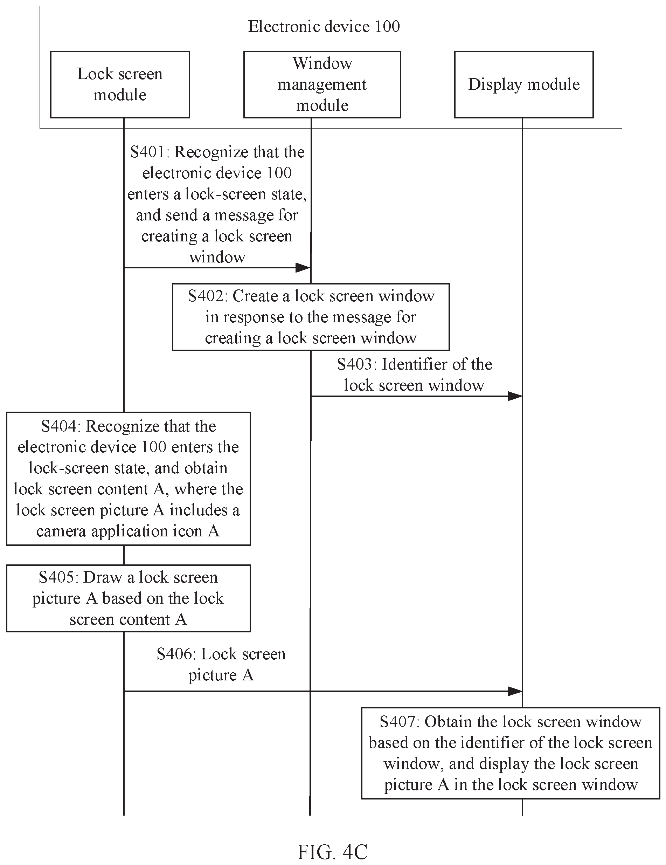

FIG. 4C is a schematic flowchart of a method for displaying a lock screen picture by an electronic device 100.

As shown in FIG. 4C, a software module used by the electronic device 100 to display the lock screen picture includes but is not limited to a lock screen module, a window management module, and a display module.

The method for displaying the lock screen picture by the electronic device 100 may include but is not limited to the following steps.

S401: The lock screen module recognizes that the electronic device 100 enters a lock-screen state, and sends, to the window management module, a message for creating a lock screen window.

When recognizing that the electronic device 100 enters the lock-screen state, the lock screen module may send, to the window management module, the message for creating a lock screen window. The message indicates the window management module to create a lock screen window, so that the display module can display the lock screen picture in the lock screen window.

Optionally, the electronic device 100 may automatically enter the lock-screen state when a user has not operated the electronic device for a long time; or a user may actively trigger the electronic device 100 to enter the lock-screen state.

S402: The window management module creates a lock screen window in response to the message for creating a lock screen window.

After receiving the message for creating a lock screen window that is sent by the lock screen module, the window management module creates a lock screen window in response to the message for creating a lock screen window.

S403: The window management module sends an identifier of the lock screen window to the display module.

After creating the lock screen window, the window management module may send the identifier of the lock screen window to the display module, so that the display module can obtain the lock screen window based on the identifier of the lock screen window, and display the lock screen picture in the lock screen window.

Optionally, the window management module may alternatively send the identifier of the lock screen window to the lock screen module.

S404: The lock screen module recognizes that the electronic device 100 enters the lock-screen state, and obtains lock screen content A, where the lock screen picture A includes an icon A of a camera application.

S405: The lock screen module draws a lock screen picture A based on the lock screen content A.

When recognizing that the electronic device 100 enters the lock-screen state, the lock screen module may obtain the lock screen content A. A type of the lock screen content A may include but is not limited to a picture, text, an icon, and the like. The lock screen content A may further include but is not limited to the following attributes of the lock screen content A: a position, a shape, a size, transparency, and the like.

Optionally, S404 and S405 may alternatively be performed before S401 or simultaneously with S401.

S406: The lock screen module sends the lock screen picture A to the display module.

After obtaining the lock screen picture A and the identifier of the lock screen window, the lock screen module may send the lock screen picture A and the identifier of the lock screen window to the display module.

Optionally, the lock screen module may alternatively send the display module to the display module.

S407: The display module obtains the lock screen window based on the identifier of the lock screen window, and displays the lock screen picture A in the lock screen window.

After obtaining the identifier of the lock screen window and the lock screen picture A, the display module may obtain the lock screen window based on the identifier of the lock screen window, and display the lock screen picture A in the lock screen window.

Optionally, S403 may alternatively be performed before, after, or simultaneously with any step that is after S402 and before S407.

For example, the lock screen picture A may be the lock screen picture 4102 shown in FIG. 4B.

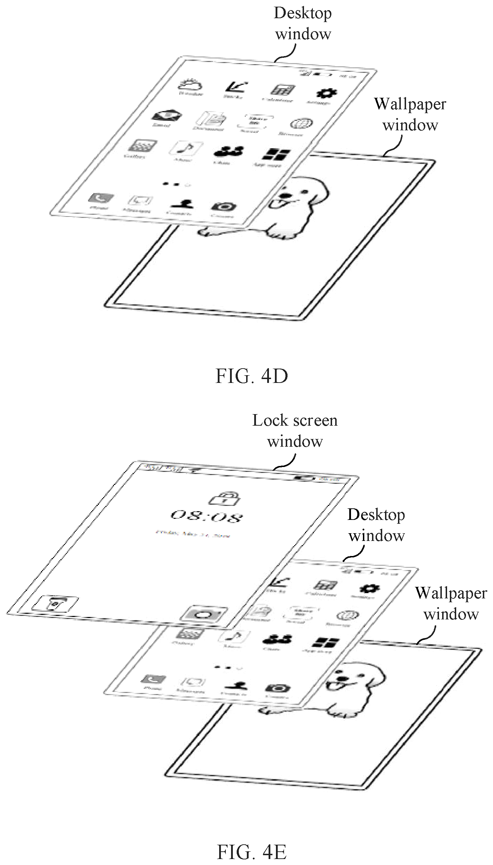

FIG. 4D is a diagram of display layers of application windows on an electronic device 100 before the electronic device 100 enters a lock-screen state.

With reference the descriptions of FIG. 4A, the electronic device 100 displays the desktop and the wallpaper. A desktop window of a desktop application and a wallpaper window of a wallpaper application exist on the electronic device 100. The desktop, for example, icons of a plurality of applications, is displayed in the desktop window. The wallpaper, for example, the image of the puppy, is displayed in the wallpaper window.

As shown in FIG. 4D, the desktop window is located at an upper layer of the wallpaper window. Optionally, transparency of the desktop window may be 100%, so that the wallpaper in the wallpaper window is displayed on the electronic device 100.

FIG. 4E is a diagram of display layers of application windows on an electronic device 100 after the electronic device 100 enters a lock-screen state.

With reference to the descriptions of FIG. 4B, after the electronic device 100 enters the lock-screen state, the electronic device 100 displays the lock screen picture 4102. A lock screen window of a lock screen module, a desktop window of a desktop application, and a wallpaper window of a wallpaper application exist on the electronic device 100.

As shown in FIG. 4E, because the electronic device 100 displays only the lock screen picture 4102, the lock screen window is located at an upper layer of the desktop window, so that the electronic device 100 can display the lock screen picture in the lock screen window, and the desktop window is still located at an upper layer of the wallpaper window.

**Scenario 2: An electronic device 100 is in a lock-screen state, and a first application is started.**

When the electronic device is in the lock-screen state, a user may perform an operation on a lock screen picture to quickly start an application without unlocking the electronic device. To improve user experience, the electronic device 100 may obtain content in the application, and display the content in the application on the lock screen picture, so that the user can preview the content in the application in advance. For example, the electronic device 100 displays some functional pages in the application or a real-time preview picture in the application.

In some embodiments, the first application may be a payment application. The user may quickly start the payment application in the lock-screen state, and a payment application window is displayed above a lock screen window. A payment code may be displayed in the payment application window. In this way, the payment code in the payment application can be quickly displayed without unlocking by the user, to perform a quick payment operation or the like. This facilitates a user operation.

In some embodiments, the first application may be a scan application. The user may quickly start the scan application in the lock-screen state, and a scan application window is displayed above a lock screen window. A scan page may be displayed in the scan application window. In this way, the user can quickly start the scan application without unlocking, and scan a picture, for example, a two-dimensional code, through the scan application, to perform a quick payment operation or the like. This facilitates a user operation.

In some embodiments, the first application may be a camera application. The user may quickly start the camera application in the lock-screen state, and a camera application window is displayed above a lock screen window. Camera preview content may be displayed in the camera application window. In this way, the user can start the camera application without unlocking, and perform a photographing operation, a video recording operation, or the like through the camera application. This facilitates a user operation.

In some embodiments, the first application may be a notepad application. The user may quickly start the notepad application in the lock-screen state, and a notepad application window is displayed above a lock screen window. Note content may be displayed in the notepad application window. In this way, the note content of the notepad application can be quickly displayed without unlocking by the user. This facilitates a user operation.

In addition to the foregoing applications, the first application may alternatively be another application. This is not limited in this application.

For example, in this embodiment of this application, an example in which the user quickly starts the camera application when the electronic device 100 is in the lock-screen state is used for description. In addition to quickly starting the camera application when the electronic device 100 is in the lock-screen state, the user may alternatively quickly start another application when the electronic device 100 is in the lock-screen state. This is not limited in this application.

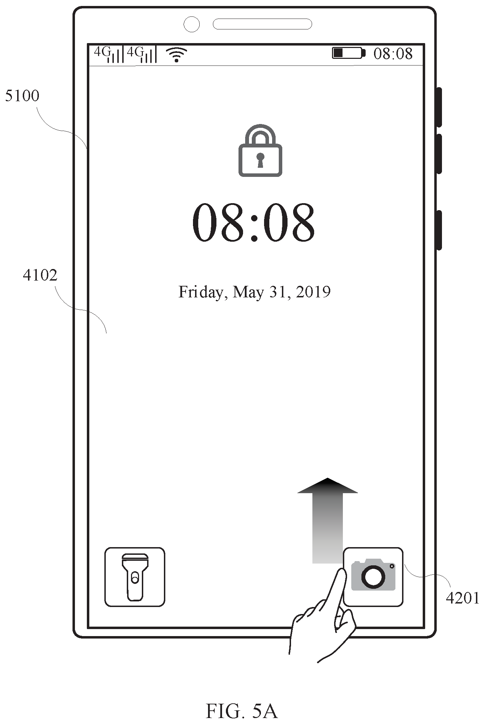

**FIG. 5A to FIG. 5I** **are diagrams of UIs on which an electronic device 100 quickly starts a camera application on a lock screen picture.**

For example, as shown in FIG. 5A, after the electronic device enters a lock-screen state, the electronic device 100 displays a lock screen window 5100, a lock screen picture 4102 is displayed in the lock screen window 5100, and an icon 4201 of the camera application is displayed on the lock screen picture 4102. A position of the icon 4201 of the camera application shown in FIG. 5A may be a display position 2.

Optionally, a planar rectangular coordinate system may be established by using a horizontal rightward direction of a lower screen edge of the electronic device 100 as a positive direction of an X axis, using a vertical upward direction of a left screen edge of the electronic device 100 as a positive direction of a Y axis, and using an intersection point between the positive direction of the X axis and the positive direction of the Y axis as a zero point, and the display position 2 of the icon 4201 of the camera application in the planar rectangular coordinate system may be obtained.

It should be noted that the display position 2 of the icon 4201 of the camera application may alternatively be determined in another manner. This is not limited in this application.

As shown in FIG. 5A, an operation of a user for the icon 4201 of the camera application, for example, an operation of touching-and-holding the icon 4201 of the camera application and sliding in the positive direction of the Y axis, may be received. In response to the user operation, the electronic device 100 may determine whether a slide distance exceeds a preset distance. If the slide distance does not exceed the preset distance, the electronic device 100 does not display a camera application window. If the slide distance exceeds the preset distance, the electronic device 100 may create a camera application window, display the camera application window above the lock screen window, and display a camera preview picture in the camera application window.

Optionally, the slide distance may include a slide distance in the positive direction of the Y axis. The slide distance may alternatively be determined in another manner, for example, may be a straight-line distance between two points or a slide distance between two points in the positive direction of the X axis. This is not limited in this application.

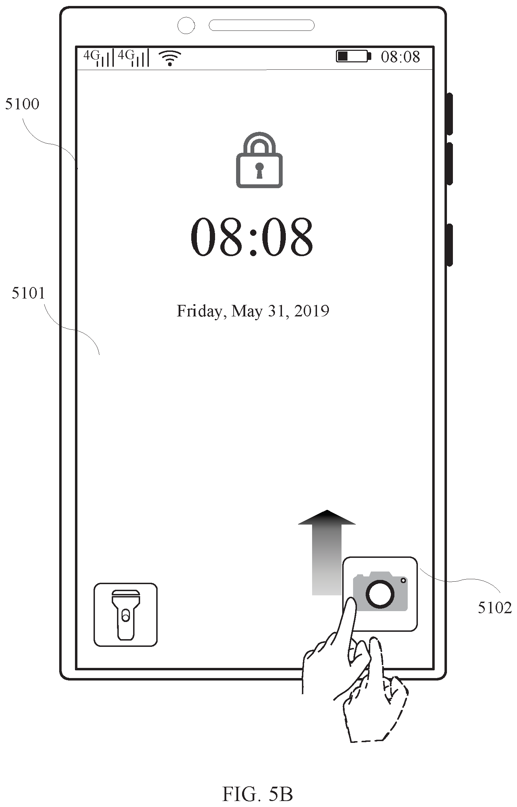

As shown in FIG. 5A and FIG. 5B, if the user touches-and-holds the icon 4201 of the camera application and slides to a position B shown in FIG. 5B, where the position B may be a position of a solid-line finger shown in FIG. 5B, and if a distance between the position B and the display position 2 is less than the preset distance, the electronic device 100 may continue to display the lock screen picture. The display position 2 may be a position of a dashed-line finger shown in FIG. 5B.

As shown in FIG. 5B, the electronic device 100 displays a lock screen window 5100, a lock screen picture 5101 is displayed in the lock screen window 5100, and an icon 5102 of the camera application is displayed on the lock screen picture 5101. A position of the icon 5102 of the camera application is the position B, and a size of the icon 5102 of the camera application is greater than a size of the icon 4201 of the camera application.

Optionally, the size of the icon 5102 of the camera application may be determined based on the distance between the position B and the display position 2. The distance between the position B and the display position 2 may be a distance between the position B and the display position 2 in the positive direction of the Y axis.

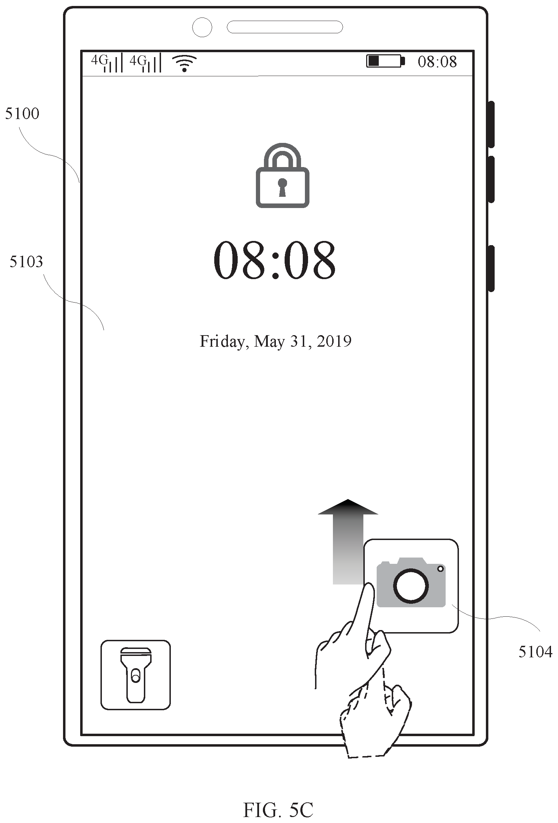

As shown in FIG. 5B and FIG. 5C, if the user touches-and-holds the icon 5102 of the camera application and slides to a position C shown in FIG. 5C, where the position C may be a position of a solid-line finger shown in FIG. 5C, and if a distance between the position C and the display position 2 is less than the preset distance, the electronic device 100 may continue to display the lock screen picture.

As shown in FIG. 5C, the electronic device 100 displays a lock screen window 5100, a lock screen picture 5103 is displayed in the lock screen window 5100, and an icon 5104 of the camera application is displayed on the lock screen picture 5103. A position of the icon 5104 of the camera application is the position C, and a size of the icon 5104 of the camera application is greater than the size of the icon 5102 of the camera application.

Optionally, the size of the icon 5104 of the camera application may be determined based on the distance between the position C and the display position 2. The distance between the position C and the display position 2 may be a distance between the position C and the display position 2 in the positive direction of the Y axis.

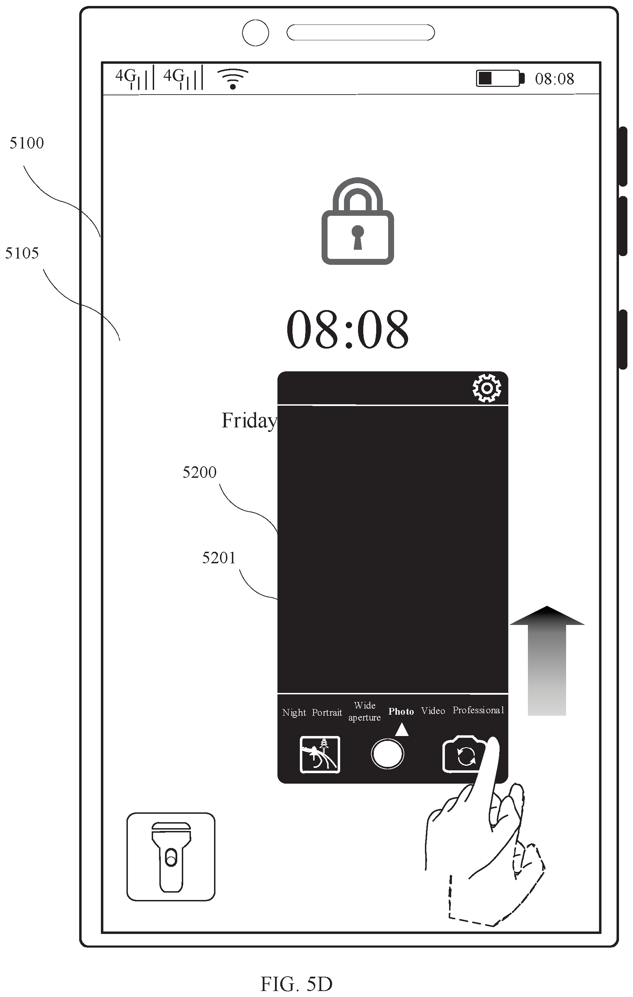

As shown in FIG. 5C and FIG. 5D, if the user touches-and-holds the icon 5104 of the camera application and slides to a position D shown in FIG. 5D, where the position D may be a position of a solid-line finger shown in FIG. 5D, and if a distance between the position D and the display position 2 is greater than the preset distance, the electronic device 100 may continue to display the lock screen picture, create a camera application window, display the camera application window at an upper layer of the lock screen window, and display a camera preview picture in the camera application window.

As shown in FIG. 5D, the electronic device 100 displays a lock screen window 5100, a lock screen picture 5105 is displayed in the lock screen window 5100, and no icon of the camera application is displayed on the lock screen picture 5105.

A camera application window 5200 is displayed above the lock screen window 5100, and a camera preview picture 5201 is displayed in the camera application window 5200. The camera preview picture 5201 may be obtained by the camera application through a camera. A position of the camera application window 5200 is the position D.

Optionally, a size of the camera application window 5200 shown in FIG. 5D may be determined based on the distance between the position D and the display position 2. The distance between the position D and the display position 2 may be a distance between the position D and the display position 2 in the positive direction of the Y axis.

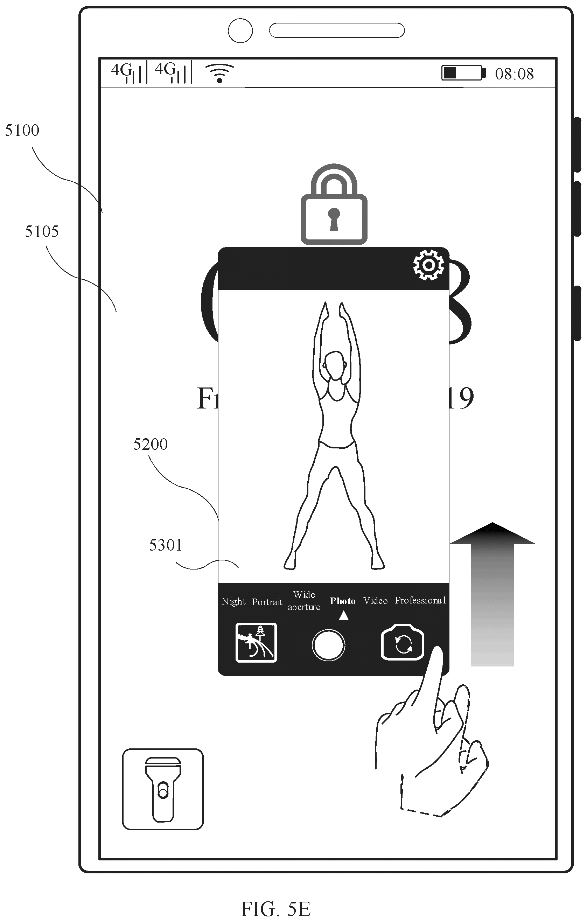

As shown in FIG. 5D and FIG. 5E, if the user touches-and-holds the camera application window 5200 and slides to a position E shown in FIG. 5E, where the position E may be a position of a solid-line finger shown in FIG. 5E, and if a distance between the position E and the display position 2 is greater than the preset distance, the electronic device 100 may continue to display the lock screen picture, display the camera application window at an upper layer of the lock screen window, and display a camera preview picture in the camera application window.

As shown in FIG. 5E, the electronic device 100 displays a lock screen window 5100, a lock screen picture 5105 is displayed in the lock screen window 5100, and no icon of the camera application is displayed on the lock screen picture 5105.

A camera application window 5200 is displayed above the lock screen window 5100, and a camera preview picture 5301 is displayed in the camera application window 5200. The camera preview picture 5301 may be obtained by the camera application through the camera. A position of the camera application window 5200 is the position E.

Optionally, a size of the camera application window 5200 shown in FIG. 5E is greater than the size of the camera application window 5200 shown in FIG. 5D. The size of the camera application window 5200 shown in FIG. 5E may be determined based on the distance between the position E and the display position 2. The distance between the position E and the display position 2 may be a distance between the position E and the display position 2 in the positive direction of the Y axis.

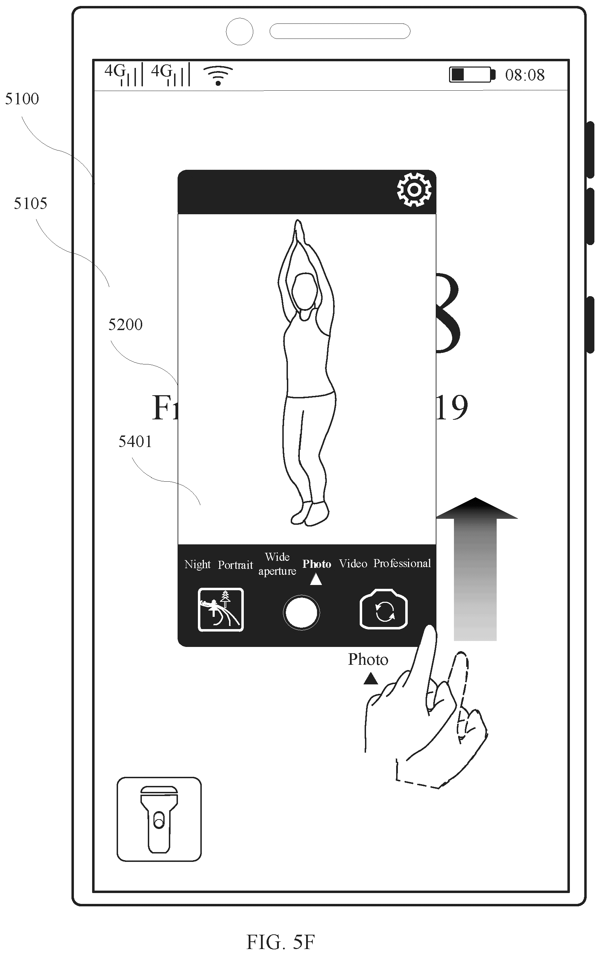

As shown in FIG. 5E and FIG. 5F, if the user touches-and-holds the camera application window 5200 and slides to a position F shown in FIG. 5F, where the position F may be a position of a solid-line finger shown in FIG. 5F, and if a distance between the position F and the display position 2 is greater than the preset distance, the electronic device 100 may continue to display the lock screen picture, display the camera application window at an upper layer of the lock screen window, and display a camera preview picture in the camera application window.

As shown in FIG. 5F, the electronic device 100 displays a lock screen window 5100, a lock screen picture 5105 is displayed in the lock screen window 5100, and no icon of the camera application is displayed on the lock screen picture 5105.

A camera application window 5200 is displayed above the lock screen window 5100, and a camera preview picture 5401 is displayed in the camera application window 5200. The camera preview picture 5401 may be obtained by the camera application through the camera. A position of the camera application window 5200 is the position F.

Optionally, a size of the camera application window 5200 shown in FIG. 5F is greater than the size of the camera application window 5200 shown in FIG. 5E. The size of the camera application window 5200 shown in FIG. 5F may be determined based on the distance between the position F and the display position 2. The distance between the position F and the display position 2 may be a distance between the position F and the display position 2 in the positive direction of the Y axis.

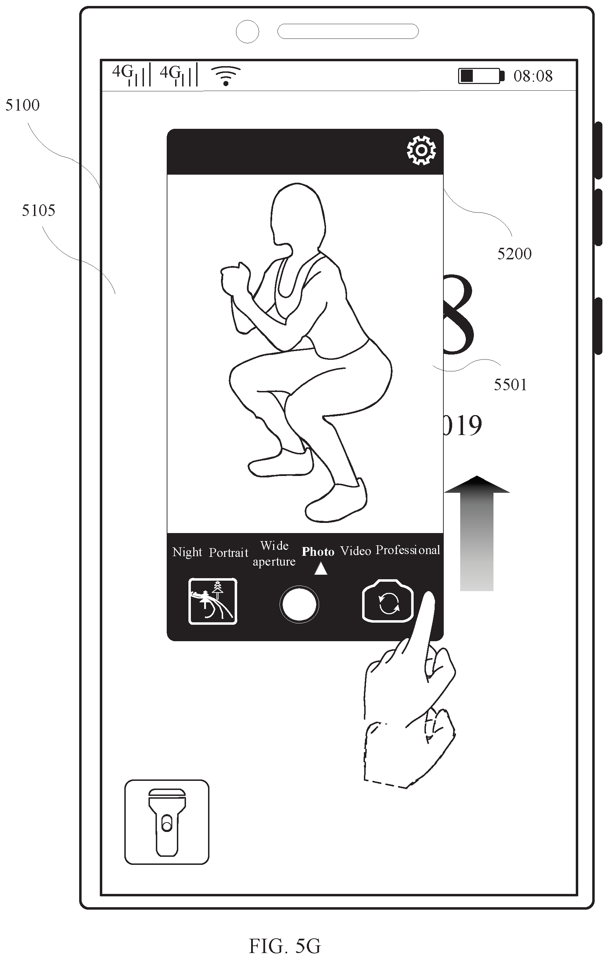

As shown in FIG. 5F and FIG. 5G, if the user touches-and-holds the camera application window 5200 and slides to a position G shown in FIG. 5G, where the position G may be a position of a solid-line finger shown in FIG. 5G, and if a distance between the position G and the display position 2 is greater than the preset distance, the electronic device 100 may continue to display the lock screen picture, display the camera application window at an upper layer of the lock screen window, and display a camera preview picture in the camera application window.

As shown in FIG. 5G, the electronic device 100 displays a lock screen window 5100, a lock screen picture 5105 is displayed in the lock screen window 5100, and no icon of the camera application is displayed on the lock screen picture 5105.

A camera application window 5200 is displayed above the lock screen window 5100, and a camera preview picture 5501 is displayed in the camera application window 5200. The camera preview picture 5501 may be obtained by the camera application through the camera. A position of the camera application window 5200 is the position G.

Optionally, a size of the camera application window 5200 shown in FIG. 5G is greater than the size of the camera application window 5200 shown in FIG. 5F. The size of the camera application window 5200 shown in FIG. 5G may be determined based on the distance between the position G and the display position 2. The distance between the position G and the display position 2 may be a distance between the position G and the display position 2 in the positive direction of the Y axis.

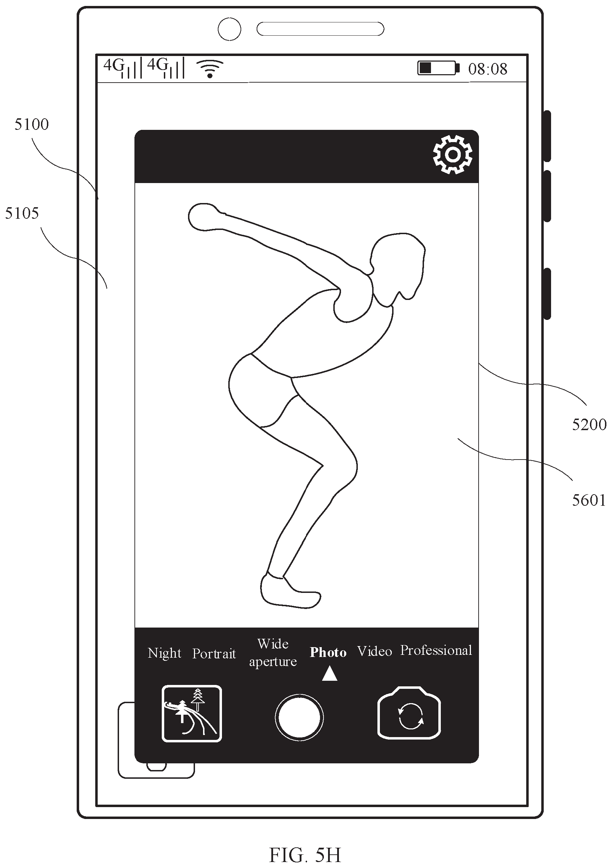

As shown in FIG. 5G and FIG. 5H, the electronic device 100 displays a user interface shown in FIG. 5H. The user stops sliding the camera application window 5200. For example, the user releases a finger. In response to the operation of stopping sliding the camera application window 5200, the electronic device 100 may display the user interface shown in FIG. 5H.

As shown in FIG. 5H, the electronic device 100 displays a lock screen window 5100, a lock screen picture 5105 is displayed in the lock screen window 5100, and no icon of the camera application is displayed on the lock screen picture 5105.

A camera application window 5200 is displayed above the lock screen window 5100, and a camera preview picture 5601 is displayed in the camera application window 5200. The camera preview picture 5601 may be obtained by the camera application through the camera.

Optionally, a size of the camera application window 5200 shown in FIG. 5H is greater than the size of the camera application window 5200 shown in FIG. 5G.

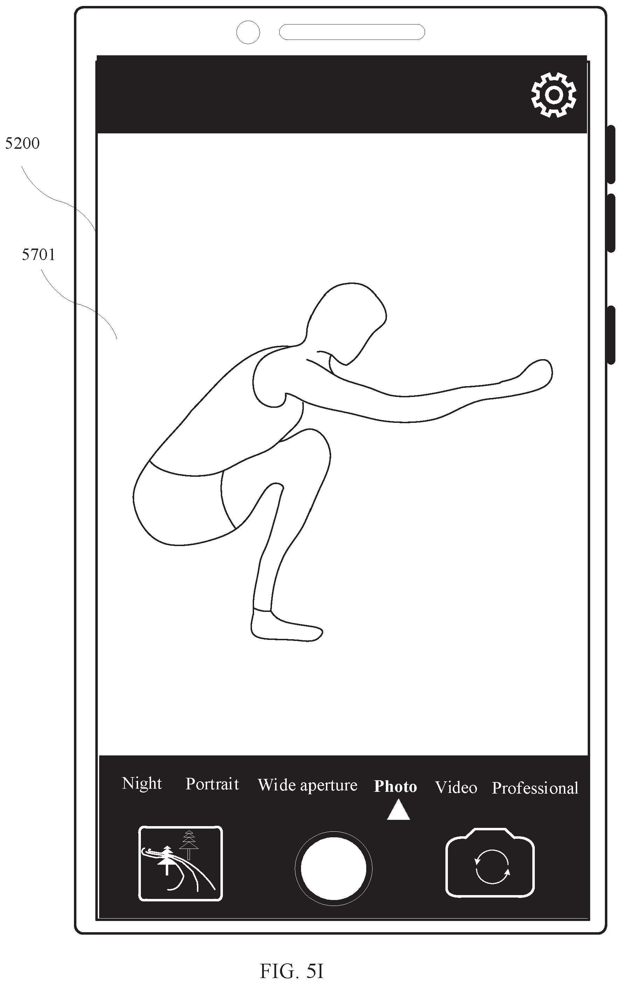

Then the electronic device 100 may display a user interface shown in FIG. 5I. As shown in FIG. 5I, the electronic device 100 displays a camera application window 5200 in full screen. In this case, the lock screen window 5100 is hidden and invisible, and a camera preview picture 5701 is displayed in the camera application window 5200. The camera preview picture 5701 may be obtained by the camera application through the camera.

Optionally, the user interface shown in FIG. 5H may be referred to as a transition picture frame.

Optionally, the size of the camera application window 5200 shown in FIG. 5H may be determined by the electronic device 100 based on a difference between the size of the camera application window 5200 shown in FIG. 5G and a size of the camera application window 5200 shown in FIG. 5I.

Optionally, after the user stops sliding the camera application window 5200 and before the electronic device 100 displays the user interface shown in FIG. 5I, in addition to the transition picture frame shown in FIG. 5H, the electronic device 100 may further display more other transition picture frames, so that the electronic device 100 can gradually enlarge the camera application window, to naturally switch to displaying the camera application window in full screen.

Optionally, a quantity of transition picture frames may be determined based on the difference between the size of the camera application window 5200 shown in FIG. 5G and the size of the camera application window 5200 shown in FIG. 5I. A larger difference between the size of the camera application window 5200 shown in FIG. 5G and the size of the camera application window 5200 shown in FIG. 5I indicates a larger quantity of transition picture frames. A smaller difference between the size of the camera application window 5200 shown in FIG. 5G and the size of the camera application window 5200 shown in FIG. 5I indicates a smaller quantity of transition picture frames.

Optionally, after the user stops sliding the camera application window 5200 and before the electronic device 100 displays the user interface shown in FIG. 5I, the electronic device 100 may alternatively not display the transition picture frame shown in FIG. 5H. After the user stops sliding the camera application window 5200, the electronic device 100 may directly switch to displaying the camera application window in full screen.

Optionally, in addition to automatically switching to displaying the camera application window in full screen after the user stops sliding the camera application window 5200, the electronic device 100 may automatically switch to displaying the camera application window in full screen after the user stops sliding the camera application window, for example, releases the finger, on any one of the user interfaces shown in FIG. 5D to FIG. 5G. For example, when the electronic device 100 displays the user interface shown in FIG. 5E, if the user stops sliding the camera application window 5200, for example, releases the finger, the electronic device 100 may also automatically switch to displaying the camera application window in full screen. Optionally, before switching to displaying the camera application window in full screen, the electronic device 100 may sequentially display the user interfaces shown in FIG. 5F to FIG. 5H, and then switch to displaying the camera application window in full screen.

Optionally, FIG. 5A to FIG. 5I show a slide operation for the icon of the camera application in the lock screen window on the electronic device 100. After a slide distance of the icon of the camera application in the positive direction of the Y axis exceeds the preset distance, the electronic device 100 displays the camera application window above the lock screen window. In another embodiment, the lock screen window may alternatively not include the icon of the camera application. The electronic device 100 may receive a slide operation of the user for the lock screen window. After a distance between a slide end position and an initial slide position exceeds the preset distance, the electronic device 100 displays the camera application window above the lock screen window. In this embodiment of this application, a slide operation for an application icon is only used as an example for description, and does not constitute a limitation.

**FIG. 5J-1 to FIG. 5J-4** **are a schematic flowchart of a method for receiving, by an electronic device 100, a user operation and starting a first application when the electronic device 100 is in a lock-screen state.**

**The embodiment of** **FIG. 5J-1 to FIG. 5J-4** **may be a method process of displaying a camera application window by an electronic device 100 for the first time in the embodiment** shown in **FIG. 5A to FIG. 5D****.**

As shown in FIG. 5J-1 to FIG. 5J-4, a software module used by the electronic device 100 to receive the user operation and start the first application when the electronic device 100 is in the lock-screen state includes but is not limited to a lock screen module, a window management module, a display module, a running management module, and a camera application.

The method for receiving, by the electronic device 100, the user operation and starting the first application when the electronic device 100 is in the lock-screen state may include but is not limited to the following steps.

S501: The display module displays a lock screen window, where a lock screen picture A is displayed in the lock screen window, the lock screen picture A includes an icon A of the camera application, and a position of the icon A of the camera application is a position 1.

After the electronic device 100 enters the lock-screen state, the window management module may create the lock screen window, and the display module may obtain the drawn lock screen picture A sent by the lock screen module, and display the lock screen picture A in the lock screen window.

For example, the lock screen window may be the lock screen window 5100 shown in FIG. 5A, the lock screen picture A may be the lock screen picture 4102 shown in FIG. 5A, and the icon A of the camera application may be the icon 4201 of the camera application shown in FIG. 5A.

S502: The lock screen module recognizes a first slide operation of a user for the icon A of the camera application in the lock screen window in a first direction.

For example, the icon A of the camera application may be the icon 4201 of the camera application shown in FIG. 5A.

For example, a planar rectangular coordinate system may be established by using a horizontal rightward direction of a lower screen edge of the electronic device 100 as a positive direction of an X axis, using a vertical upward direction of a left screen edge of the electronic device 100 as a positive direction of a Y axis, and using an intersection point between the positive direction of the X axis and the positive direction of the Y axis as a zero point. The first direction may be a direction toward the positive direction of the Y axis.

It should be noted that the first direction may be a direction that is toward the positive direction of the Y axis and that forms an included angle with the positive direction of the Y axis. The included angle may be greater than or equal to 0 degrees and less than 90 degrees. For example, the first direction may be a direction that forms an included angle of 45 degrees with the positive direction of the Y axis.

For example, the first slide operation for the icon A of the camera application in the first direction may be a slide operation for the icon 4201 of the camera application in the positive direction of the Y axis.

S503: The lock screen module determines a display position 2 based on an end position of the first slide operation.

For example, the display position 2 may be the position B shown in FIG. 5B, or the display position 2 may be the position C shown in FIG. 5C, or the display position 2 may be the position D shown in FIG. 5D.

S504: The lock screen module needs to determine whether a distance between the display position 2 and the position 1 is greater than a preset distance.

For example, the position 1 of the icon A of the camera application may be the display position 2 of the icon 4201 of the camera application shown in FIG. 5A.

Optionally, the distance between the display position 2 and the position 1 may be a distance between the display position 2 and the position 1 in the positive direction of the Y axis. In another embodiment, the distance between the display position 2 and the position 1 may alternatively be a straight-line distance between two points: the display position 2 and the position 1; or the like. This is not limited in this application.

When the distance between the display position 2 and the position 1 is less than the preset distance, the electronic device 100 may continue to display the lock screen window. Then, when a distance between the end position of the slide operation and the position 1 is greater than the preset distance, the electronic device 100 creates a camera application window, that is, performs S505 to S508.

When the distance between the display position 2 and the position 1 is greater than the preset distance, the electronic device 100 may create a camera application window, and display the camera application window above the lock screen application window, that is, perform S509 to S522.

S505: The lock screen module obtains lock screen content B, where the lock screen picture B includes an icon B of the camera application.

When the distance between the display position 2 and the position 1 is less than the preset distance, the electronic device 100 may continue to display the lock screen window, and continue to display a lock screen picture in the lock screen window.

For example, the display position 2 may be the position B shown in FIG. 5B, or the display position 2 may be the position C shown in FIG. 5C.

Optionally, after the electronic device 100 receives the first slide operation of the user, if the distance between the display position 2 and the position 1 is less than the preset distance, the lock screen module may obtain the lock screen content B, where the lock screen content B is the same as or different from lock screen content A.

Optionally, the lock screen content B includes the icon B of the camera application, and a position of the icon B of the camera application in the lock screen content B may be the same as or different from the position of the icon A of the camera application in the lock screen content A.

Optionally, a size of the icon B of the camera application may be greater than a size of the icon A of the camera application, and the size of the icon B of the camera application may be determined based on the distance between the display position 2 and the position 1.

Optionally, a size of the icon B of the camera application may alternatively be the same as a size of the icon A of the camera application.

S506: The lock screen module draws a lock screen picture B based on the lock screen content B.

After obtaining the lock screen content B, the lock screen module may draw the lock screen picture B based on the lock screen content B.

For example, the lock screen picture B may be the lock screen picture 5101 shown in FIG. 5B, or the lock screen picture B may be the lock screen picture 5103 shown in FIG. 5C.

S507: The lock screen module sends the lock screen picture B to the display module.

S508: The display module obtains the lock screen window based on an identifier of the lock screen window, and displays the lock screen picture B in the lock screen window.

After drawing the lock screen picture B, the lock screen module may send the lock screen picture B and the identifier of the lock screen window to the display module.

After receiving the lock screen picture B sent by the lock screen module, the display module may obtain the lock screen window based on the identifier of the lock screen window, and display the lock screen picture B in the lock screen window.

Optionally, the lock screen module may alternatively send the identifier of the lock screen window to the display module.

S509: The lock screen module determines a size 1 of a camera application window.

When the distance between the display position 2 and the position 1 is greater than the preset distance, the electronic device 100 may create a camera application window, and display the camera application window above the lock screen application window.

Before creating a camera application window, the lock screen module may determine a size of the camera application window.

Optionally, the lock screen module may determine the size 1 of the camera application window based on a distance between the end position (for example, the display position 2) and an initial position (the display position of the icon A of the camera application, for example, the position 1) of the first slide operation.

Optionally, the distance between the end position and the initial position of the first slide operation may be a vertical distance between the end position and the initial position of the first slide operation.

For example, the display position 2 may be the position D shown in FIG. 5D, and the initial position may be the position 1. The lock screen module may determine the size 1 of the camera application window based on the position D and the position 1. In this case, the size 1 of the camera application window may be a size of the camera application window 5200 shown in FIG. 5D.

S510: The lock screen module sends a message for creating a camera application window to the window management module, where the message carries the size 1 and the display position 2 of the camera application window.

S511: In response to the message for creating a camera application window, the window management module creates a camera application window, where a size of the camera application window is the size 1.

After determining the size 1 of the camera application window, the lock screen module may send the message for creating a camera application window to the window management module, where the message carries the size 1 and the display position 2 of the camera application window.

After receiving the message for creating a camera application window that is sent by the lock screen module, the window management module may create a camera application window in response to the message for creating a camera application window, where a size of the camera application window is the size 1.

For example, if the display position 2 is the position D shown in FIG. 5D, the camera application window may be the camera application window 5200 shown in FIG. 5D.

S512: The window management module sends an identifier of the camera application window to the lock screen module.

After creating the camera application window, the window management module may obtain the identifier of the camera application window, and send the identifier of the camera application window to the lock screen module. When the user continues to slide the camera application window in the first direction, the lock screen module may send, to the window management module, a current display position of the camera application window and the identifier of the camera application window. The window management module may change a position and a size of the camera application window based on the identifier of the camera application window, so that the camera application window can change with a slide position of a finger of the user, to achieve responsiveness.

Optionally, before a process of the camera application is terminated, the identifier of the camera application window may remain unchanged.

S513: The window management module sends the identifier of the camera application window and the display position 2 of the camera application window to the display module.

After creating the camera application window, the window management module may alternatively send the identifier of the camera application window and the display position 2 of the camera application window to the display module.

The display module may obtain the camera application window based on the identifier of the camera application window, and display, in the camera application window, a camera preview picture sent by the camera application.

The display position 2 of the camera application window is used for the display module to determine a display position of the camera application window.

Optionally, S513 may alternatively be performed before S512, or S513 and S512 may be simultaneously performed. Optionally, the identifier and the display position 2 of the camera application window may be simultaneously sent to the camera application, or may be separately sent to the camera application.

S514: The window management module sends a message for starting the camera application to the running management module.

S515: The running management module sends a message for starting the camera application to the camera application.

After receiving the message for creating a camera application window, in response to the message for creating a camera application window, the window management module may send the message for starting the camera application to the running management module. Then the running management module sends the message for starting the camera application to the camera application. The message for starting the camera application indicates to start the camera application.

Optionally, S514 and S515 may be one piece of information. To be specific, the window management module directly sends a message for starting the camera application to the camera application, without participation of the running management module.

S516: The camera application creates a process of the camera application in response to the message for starting the camera application.

After receiving the message for starting the camera application, the camera application may create a process of the camera application in response to the message for starting the camera application. After creating the process of the camera application, the camera application is started, and the camera application may invoke a camera of the electronic device 100 to capture image content.

Optionally, S514 to S516 may alternatively be performed after S510, and an execution sequence between S514 to S516 and S511 to S513 is not limited.

S517: The camera application sends, to the running management module, a message indicating that the camera application is started.

S518: The running management module sends, to the window management module, a message indicating that the camera application is started.

After creating the process of the camera application, the camera application may send, to the running management module, the message indicating that the camera application is started. Then the running management module sends, to the window management module, the message indicating that the camera application is started.

Optionally, the camera application may alternatively directly send, to the window management module, a message indicating that the camera application is started.

Optionally, S517 and S518 may alternatively not be performed.

S519: The camera application draws a camera preview picture A based on image content captured by the camera.

S520: The camera application sends the camera preview picture A to the display module.

After the camera application is started, the camera application may invoke the image content captured by the camera of the electronic device 100 to draw the camera preview picture, and send the camera preview picture A to the display module.

S521: The display module obtains the camera application window based on the identifier of the camera application window, and displays the camera application window above the lock screen window based on the display position 2.

After receiving the identifier of the camera application window and the display position 2 of the camera application window that are sent by the window management module, the display module may obtain the camera application window based on the identifier of the camera application window, and display the camera application window above the lock screen window based on the display position 2 of the camera application window.

Optionally, that the display module displays the camera application window above the lock screen window based on the display position 2 may mean that the display position 2 is a display position of a vertex of the camera application window, or may be a display position of a point on an edge of the camera application window, or may be a display position of a point inside the camera application window, or may be a display position of a point outside the camera application window instead of a display position on the camera application window or a display position of a point inside the camera application window. A manner of displaying, by the display module, the camera application window based on the display position 2 is not limited in this application.

In the following descriptions, for explanations of how the display module displays a camera application window at a display position, refer to the descriptions of displaying the camera application window based on the display position 2 in S521. Details are not described below again.

S522: The display module displays the camera preview picture A in the camera application window of the size 1.

After receiving the camera preview picture A, the display module may display the camera preview picture A in the camera application window of the size 1.

Optionally, S522 may alternatively be performed before or simultaneously with S521.

FIG. 5K is a diagram of display layers of application windows on an electronic device 100 when a camera application is started and a camera application window is displayed after the electronic device 100 enters a lock-screen state.

For example, the camera application window may be the camera application window 5200 shown in FIG. 5F.

After the electronic device 100 enters the lock-screen state, if a slide distance of a user in a lock screen window in a first direction exceeds a preset distance, the electronic device 100 creates a camera application window, and displays the camera application window above the lock screen window. In this case, the camera application window of a camera application, the lock screen window of a lock screen module, a desktop window of a lock desktop application, and a wallpaper window of a wallpaper application exist on the electronic device 100.

As shown in FIG. 5K, before the user unlocks the electronic device 100 or releases a finger, the electronic device 100 continues to display the camera application window above the lock screen window. In this case, the camera application window is located at an upper layer of the lock screen window, the lock screen window is located at an upper layer of the desktop window, and the desktop window is still located at an upper layer of the wallpaper window.

**Scenario 3: An electronic device 100 is in a lock-screen state, and after a first application is started and an application window of the first application is displayed, a display position of the application window of the first application moves with a position of a finger of a user.**

When the electronic device is in the lock-screen state, the electronic device 100 opens the application window of the first application, and displays the application window of the first application at an upper layer of a lock screen window. The user may touch-and-hold and continue to move the application window of the first application in a first direction. The display position of the application window of the first application moves with the position of the finger of the user.

Optionally, when the position of the finger of the user moves in the first direction, the position of the application window of the first application changes, and a size of the application window of the first application also increases correspondingly.

Optionally, the application window of the first application may alternatively remain unchanged, and only the display position of the application window of the first application changes.

For example, the first application may be a camera application.

**FIG. 6A-1** **and** **FIG. 6A-2** **are a diagram of UIs on which a camera application window moves with movement of a finger in a first direction.**

**Optionally,** **FIG. 6A-1** **and** **FIG. 6A-2** **may show a method process of the embodiment shown in** **FIG. 5D to FIG. 5G****.**

As shown in FIG. 6A-1 and FIG. 6A-2, when an electronic device 100 is in a lock-screen state, a software module for enabling the camera application window to move with the movement of the finger in the first direction includes but is not limited to a lock screen module, a window management module, a display module, and a camera application.

The method for enabling the camera application window to move with the movement of the finger in the first direction when the electronic device 100 is in the lock-screen state may include but is not limited to the following steps.

S601: The display module displays the camera application window, where a camera preview picture A is displayed in the camera application window.

For example, the camera application window may be the camera application window 5200 shown in FIG. 5D, and the camera preview picture A may be the camera preview picture 5201 displayed by the electronic device 100 in the camera application window 5200 shown in FIG. 5D. The camera preview picture 5201 may be a picture captured by the electronic device 100 through a camera.

For example, the camera application window may be the camera application window 5200 shown in FIG. 5E, and the camera preview picture A may be the camera preview picture 5301 displayed by the electronic device 100 in the camera application window 5200 shown in FIG. 5E. The camera preview picture 5301 may be a picture captured by the electronic device 100 through a camera.

For example, the camera application window may be the camera application window 5200 shown in FIG. 5F, and the camera preview picture A may be the camera preview picture 5401 displayed by the electronic device 100 in the camera application window 5200 shown in FIG. 5F. The camera preview picture 5401 may be a picture captured by the electronic device 100 through a camera.

For example, the camera application window may be the camera application window 5200 shown in FIG. 5G, and the camera preview picture A may be the camera preview picture 5501 displayed by the electronic device 100 in the camera application window 5200 shown in FIG. 5G. The camera preview picture 5501 may be a picture captured by the electronic device 100 through a camera.

S602: The lock screen module recognizes a first slide operation that the user continues to perform on the camera application window in the first direction.

After the display module displays the camera application window, the user may continue to drag the camera application window in the first direction in a lock screen window, so that a display position of the camera application window also moves in the first direction.

For example, when the camera application window may be the camera application window 5200 shown in FIG. 5D, the first slide operation for the camera application window in the first direction may be a slide operation for the camera application window 5200 in the positive direction of the Y axis shown in FIG. 5D.

For example, when the camera application window may be the camera application window 5200 shown in FIG. 5E, the first slide operation for the camera application window in the first direction may be a slide operation for the camera application window 5200 in the positive direction of the Y axis shown in FIG. 5E.

For example, when the camera application window may be the camera application window 5200 shown in FIG. 5F, the first slide operation for the camera application window in the first direction may be a slide operation for the camera application window 5200 in the positive direction of the Y axis shown in FIG. 5F.

For example, when the camera application window may be the camera application window 5200 shown in FIG. 5G, the first slide operation for the camera application window in the first direction may be a slide operation for the camera application window 5200 in the positive direction of the Y axis shown in FIG. 5G.

S603: The lock screen module determines a display position 3 based on an end position of the first slide operation.

For example, when the first slide operation is a slide operation for the camera application window 5200 in the positive direction of the Y axis shown in FIG. 5D, the display position 3 may be the position E shown in FIG. 5E.

For example, when the first slide operation is a slide operation for the camera application window 5200 in the positive direction of the Y axis shown in FIG. 5E, the display position 3 may be the position F shown in FIG. 5F.

For example, when the first slide operation is a slide operation for the camera application window 5200 in the positive direction of the Y axis shown in FIG. 5F, the display position 3 may alternatively be a position G shown in FIG. 5G.

S604: The lock screen module determines a size 2 of the camera application window.

A distance between the display position 3 and a position 1 is greater than a preset distance.

Optionally, the lock screen module may determine the size 2 of the camera application window based on the display position 3 and the position 1.

For example, if the display position 3 is the position E shown in FIG. 5E, the size 2 of the camera application window may be a size of the camera application window 5200 shown in FIG. 5E.

For example, if the display position 3 is the position F shown in FIG. 5F, the size 2 of the camera application window may be a size of the camera application window 5200 shown in FIG. 5F.

For example, if the display position 3 is the position G shown in FIG. 5G, the size 2 of the camera application window may be a size of the camera application window 5200 shown in FIG. 5G.

For example, if the display position 3 is the position H shown in FIG. 5H, the size 2 of the camera application window may be a size of the camera application window 5200 shown in FIG. 5H.

S605: The lock screen module sends the size 2 and the display position 3 of the camera application window to the window management module.

Optionally, the size 2 and the display position 3 of the camera application window may alternatively be separately sent to the window management module.

The size 2 of the camera application window is used for the camera application window to scale the camera application window, to obtain a camera application window of the size 2. The display position 3 is used to determine a display position of the camera application window of the size 2.

S606: The window management module changes a size of the camera application window to the size 2.

After receiving the size 2 of the camera application window that is sent by the lock screen module, the window management module may change the size of the camera application window to the size 2.

S607: The window management module sends the display position 3 of the camera application window to the display module.

After obtaining the display position 3, the window management module may send the display position 3 to the display module. The display position 3 is used for the display module to determine the display position of the camera application window of the size 2.

Optionally, S607 may alternatively be performed by the window management module.

S608: The camera application draws a camera preview picture B based on an image frame captured by the camera.

For example, if the display position 3 is the position E shown in FIG. 5E, the camera preview picture B may be the camera preview picture 5301 shown in FIG. 5E.

For example, if the display position 3 is the position F shown in FIG. 5F, the camera preview picture B may be the camera preview picture 5401 shown in FIG. 5F.

For example, if the display position 3 is the position G shown in FIG. 5G, the camera preview picture B may be the camera preview picture 5501 shown in FIG. 5G.

S609: The camera application sends the camera preview picture B to the display module.

After the camera application is started, the camera application may invoke image content captured by the camera of the electronic device 100 to draw a camera preview picture, for example, the camera preview picture B, and send the camera preview picture B to the display module.

S610: The display module obtains the camera application window based on an identifier of the camera application window, and displays the camera application window above the lock screen window based on the display position 3.

The display module may obtain the camera application window based on the identifier of the camera application window, and display the camera application window of the size 2 above the lock screen window based on the display position 3.

S611: The display module displays the camera preview picture B in the camera application window of the size 2.

After receiving the camera preview picture B, the display module may display the camera preview picture B in the camera application window of the size 2.

Optionally, S611 may alternatively be performed before or simultaneously with S610.

FIG. 6B is a diagram of display layers of application windows on an electronic device 100 after the electronic device 100 enters a lock-screen state and a display position of a camera application window moves with a position of a finger of a user.

For example, the camera application window may be the camera application window 5200 shown in FIG. 5G.

After the electronic device 100 enters the lock-screen state and the display position of the camera application window moves with the position of the finger of the user, and the camera application window of the camera application, a lock screen window of a lock screen module, a desktop window of a desktop application, and a wallpaper window of a wallpaper application exist on the electronic device 100.

As shown in FIG. 6B, before the user unlocks the electronic device 100 or releases the finger, the electronic device 100 continues to display the camera application window above the lock screen window. In this case, the camera application window is located at an upper layer of the lock screen window, the lock screen window is located at an upper layer of the desktop window, and the desktop window is still located at an upper layer of the wallpaper window.

**Scenario 4: An electronic device 100 is in a lock-screen state, and when a slide distance in a first direction is less than a preset distance, to be specific, the electronic device 100 does not display an application window of a first application, if a user continues to slide in a second direction, the electronic device 100 continues to display lock screen content.**

Optionally, when the user continues to slide an icon of a camera application in the second direction, a display position of the icon of the camera application changes, and a size of the icon of the camera application also decreases.

Optionally, when the user continues to slide the icon of the camera application in the second direction, a display position of the icon of the camera application changes, and a size of the icon of the camera application may alternatively remain unchanged.

It should be noted that the second direction may be a direction that is toward a negative direction of a Y axis and that forms an included angle with the negative direction of the Y axis. The included angle may be greater than or equal to 0 degrees and less than 90 degrees. For example, the first direction may be a direction that forms an included angle of 45 degrees with the negative direction of the Y axis.

**FIG. 7A** **and** **FIG. 7B** **are diagrams of UIs on which an electronic device 100 continues to display lock screen content when a user slides an icon of a camera application in a second direction on a lock screen interface.**

For example, as shown in FIG. 7A, the electronic device 100 displays a lock screen window 5100, a lock screen picture 5103 is displayed in the lock screen window 5100, and the lock screen picture 5103 includes an icon 5104 of the camera application.

As shown in FIG. 7A and FIG. 7B, if the user touches-and-holds the icon 5104 of the camera application and slides to a position I shown in FIG. 7B, where the position I may be a position of a solid-line finger shown in FIG. 7B, and if a distance between the position D and a display position 1 is less than a preset distance, the electronic device 100 may continue to display the lock screen picture.

As shown in FIG. 7B, the electronic device 100 displays a lock screen window 5100, a lock screen picture 7101 is displayed in the lock screen window 5100, and an icon 7102 of the camera application is displayed on the lock screen picture 7101.

Optionally, a size of the icon 7102 may be less than a size of the icon 5104, or a size of the icon 7102 may be the same as a size of the icon 5104.

**FIG. 7C** **is a schematic flowchart of a method for continuing, by an electronic device 100, to display lock screen content when a user slides an icon of a camera application in a second direction on a lock screen interface.**

As shown in FIG. 7C, when the electronic device 100 is in a lock-screen state, a software module used by the electronic device 100 to continue to display the lock screen content when the electronic device 100 receives the operation of sliding, by the user, the icon of the camera application in the second direction on the lock screen interface includes but is not limited to a lock screen module and a display module.

The method for continuing, by the electronic device 100, to display the lock screen content when the electronic device 100 is in the lock-screen state and the electronic device 100 receives the operation of sliding, by the user, the icon of the camera application in the second direction on the lock screen interface may include but is not limited to the following steps.

S701: The display module displays a lock screen window, where a lock screen picture B is displayed in the lock screen window, and the lock screen picture B includes an icon B of the camera application.

For example, the lock screen window may be the lock screen window 5100 shown in FIG. 7A, the lock screen picture B may be the lock screen picture 5103 shown in FIG. 7A, and the icon B of the camera application may be the icon 5104 of the camera application shown in FIG. 7A.

S702: The lock screen module recognizes a first slide operation of the user for the icon B of the camera application in the lock screen window in the second direction.

For example, the first slide operation for the icon B of the camera application in the second direction may be a slide operation for the icon 5104 of the camera application in the negative direction of the Y axis shown in FIG. 7A.

S703: The lock screen module obtains lock screen content C, where the lock screen content C includes an icon C of the camera application.

Optionally, the lock screen content C may be lock screen content on the lock screen picture 7101 shown in FIG. 7B, and the icon C of the camera application may be the icon 7102 of the camera application shown in FIG. 7B.

Optionally, a size of the icon C of the camera application may be determined based on a distance between an end position and an initial position of the first slide operation for the icon B of the camera application in the second direction.

Optionally, a display position of the icon C of the camera application may be determined based on the end position of the first slide operation for the icon B of the camera application in the second direction.

The lock screen content C may be different from lock screen content B. For example, the display position and/or the size of the icon C of the camera application may be different from a display position and/or a size of the icon 4201 of the camera application shown in FIG. 4B.

The lock screen content C may be the same as lock screen content B. For example, the display position and the size of the icon C of the camera application may be the same as a display position and a size of the icon 4201 of the camera application shown in FIG. 4B.

S704: The lock screen module draws a lock screen picture C based on the lock screen content C.

After obtaining the lock screen content C, the lock screen module may draw the lock screen picture C based on the lock screen content C.

For example, the lock screen picture C may be the lock screen picture 7101 shown in FIG. 7B.

S705: The lock screen module sends the lock screen picture C to the display module.

After obtaining the lock screen picture C, the lock screen module may send the lock screen picture C and an identifier of the lock screen window to the display module.

Optionally, the lock screen picture C and the lock screen window may be sent to the display module simultaneously or at different time.

Optionally, the lock screen module may alternatively send the identifier of the lock screen window to the display module.

S706: The display module obtains the lock screen window based on the identifier of the lock screen window, and displays the lock screen picture C in the lock screen window.

After obtaining the identifier of the lock screen window and the lock screen picture C, the display module may obtain the lock screen window based on the identifier of the lock screen window, and display the lock screen picture C in the lock screen window.

When the electronic device 100 receives the operation of sliding, by the user, the icon of the camera application in the second direction on the lock screen interface and the electronic device 100 continues to display the lock screen content,
the lock screen window of the lock screen module, a desktop window of a desktop application, and a wallpaper window of a wallpaper application exist on the electronic device 100. A positional relationship between display layers of the three application windows may be similar to the positional relationship shown in FIG. 4E. Details are not described herein again in this application.

**Scenario 5: An electronic device 100 is in a lock-screen state, and when a slide distance in a first direction is greater than a preset distance, to be specific, the electronic device 100 has created and displayed an application window of a first application above a lock screen window, if a user continues to slide in a second direction, the electronic device 100 may continue to display the application window or stop displaying the application window.**

When the application window of the first application is displayed above the lock screen window and the user continues to slide the application window of the first application in the second direction, the electronic device 100 may determine, based on an end position of the slide operation of the user, to continue to display lock screen content or continue to display application content in the application window.

If a distance between the end position and an initial position of the slide operation of the user is greater than the preset distance, the electronic device 100 may continue to display the application content in the application window.

If the distance between the end position and an initial position of the slide operation of the user is less than the preset distance, the electronic device 100 stops displaying the application window of the first application, and continues to display the lock screen content.

For example, the first application may be a camera application, and the initial position may be a display position of the icon 4201 of the camera application shown in FIG. 4B.

Optionally, if a distance between the end position of the slide operation of the user and the icon 4201 of the camera application is greater than the preset distance, a display position of an application window of the camera application changes, and a size of the application window of the camera application may remain unchanged or decrease.

**FIG. 8A to FIG. 8C** **are diagrams of UIs on which an electronic device 100 continues to display an application window of a camera application or stops displaying an application window of a camera application when a user slides the application window in a second direction on a lock screen interface.**

For example, as shown in FIG. 8A, the electronic device 100 displays a camera application window 5200 in a lock screen window 5100, and a camera preview picture 5401 is displayed in the camera application window 5200.

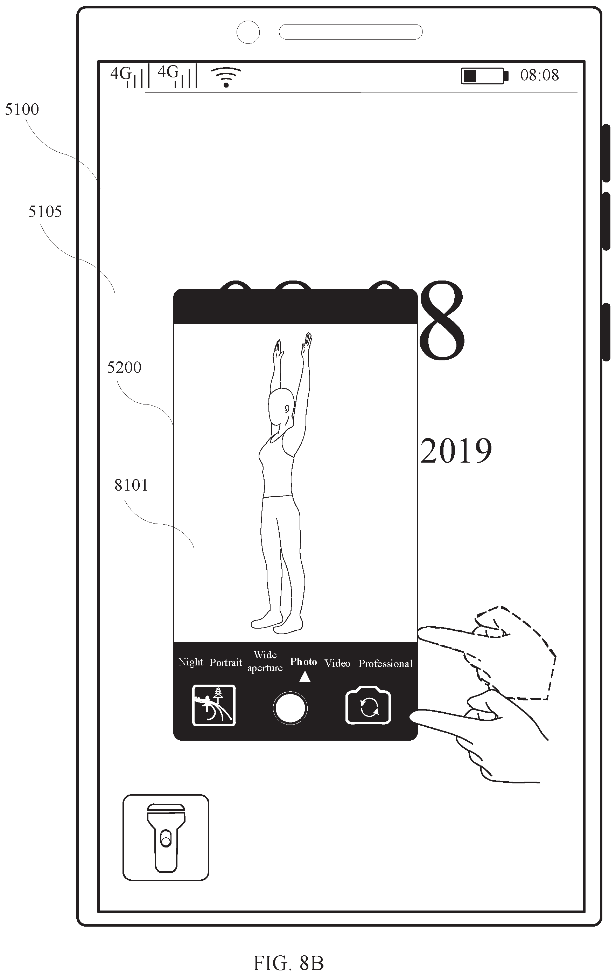

As shown in FIG. 8A and FIG. 8B, if the user touches-and-holds the camera application window 5200 and slides to a position J shown in FIG. 8B, where the position J may be a position of a solid-line finger shown in FIG. 8B, and if a distance between the position J shown in FIG. 8B and a position 1 is greater than a preset distance, the electronic device 100 may continue to display the application window of the camera application. For example, the electronic device 100 may continue to display the camera application window 5200 of the camera application, display the camera application window 5200 at an upper layer of the lock screen window, and display a camera preview picture 8101 in the camera application window 5200.

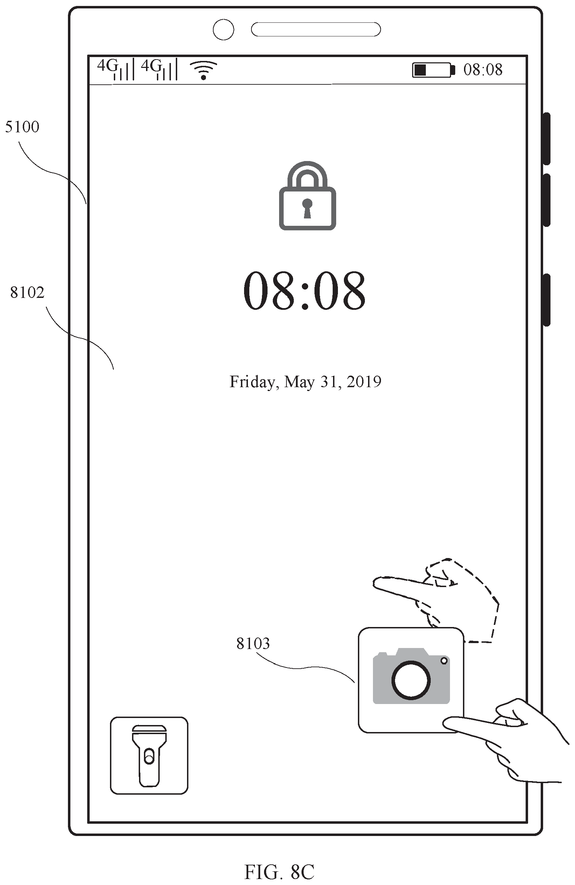

As shown in FIG. 8A and FIG. 8C, if the user touches-and-holds the camera application window 5200 and slides to a position K shown in FIG. 8C, where the position K may be a position of a solid-line finger shown in FIG. 8C, and if a distance between the position K shown in FIG. 8C and the position 1 is less than the preset distance, the electronic device 100 may stop displaying the application window of the camera application. For example, the electronic device 100 may stop displaying the camera application window 5200, and display a camera preview picture 8102 in the lock screen window 5100. The camera preview picture 8102 includes an icon 8103 of the camera application.

**FIG. 8D-1** **and** **FIG. 8D-2** **are a schematic flowchart of a method for continuing, by an electronic device 100, to display an application window of a camera application or stopping displaying an application window of a camera application when a user slides the application window in a second direction on a lock screen interface.**

As shown in FIG. 8D-1 and FIG. 8D-2, when the electronic device 100 is in a lock-screen state, a software module used by the electronic device 100 to receive the operation of sliding, by the user, the application window of the camera application in the second direction on the lock screen interface includes but is not limited to a lock screen module, a window management module, a display module, and a camera application.

The method for receiving, by the electronic device 100, the operation of sliding, by the user, the application window of the camera application in the second direction on the lock screen interface when the electronic device 100 is in the lock-screen state may include but is not limited to the following steps.

S801: The display module displays a camera application window, where a camera preview picture A is displayed in the camera application window.

For example, the camera application window may be the camera application window 5200 shown in FIG. 8A. In this case, the camera preview picture A may be the camera preview picture 5401 shown in FIG. 8A.

For example, the camera application window may alternatively be the camera application window 5200 shown in FIG. 5D. In this case, the camera preview picture A may be the camera preview picture 5201 shown in FIG. 5D.

For example, the camera application window may alternatively be the camera application window 5200 shown in FIG. 5E. In this case, the camera preview picture A may be the camera preview picture 5301 shown in FIG. 5E.

For example, the camera application window may alternatively be the camera application window 5200 shown in FIG. 5G. In this case, the camera preview picture A may be the camera preview picture 5501 shown in FIG. 5G.

For example, the camera application window may alternatively be the camera application window 5200 shown in FIG. 5H. In this case, the camera preview picture A may be the camera preview picture 5601 shown in FIG. 5H.

S802: The lock screen module recognizes a first slide operation of the user for the camera application window in the second direction.

For example, the first slide operation for the camera application window in the second direction may be an operation of touching-and-holding the camera application window 5200 and sliding in a positive direction of a Y axis shown in FIG. 8A.

S803: The lock screen module determines a display position 5 based on an end position of the first slide operation.

S804: The lock screen module needs to determine whether a distance between the display position 5 and a position 1 is greater than a preset distance.

If the distance between the display position 5 and the position 1 is greater than the preset distance, the electronic device 100 may continue to display the camera application window, and change a size and a display position of the camera application window. Optionally, the electronic device 100 may alternatively not change a size of the camera application window. For example, the display position 5 may be the position of the solid-line finger shown in FIG. 8B, for example, the position J shown in FIG. 8B.

If the distance between the display position 5 and the position 1 is less than the preset distance, the electronic device 100 needs to stop displaying the camera application window. For example, the display position 5 may be the position of the solid-line finger shown in FIG. 8C, for example, the position K shown in FIG. 8C.

S805: The lock screen module obtains lock screen content D, where the lock screen content D includes an icon D of the camera application.

S806: The lock screen module draws a lock screen picture D based on the lock screen content D.

For example, the lock screen content D may be lock screen content shown in FIG. 8C. The icon D of the camera application may be the icon 8103 of the camera application shown in FIG. 8C.

S807: The lock screen module sends the lock screen picture D to the display module.

After obtaining the lock screen picture D, the lock screen module may send the lock screen picture D and an identifier of a lock screen window to the display module.

Optionally, the lock screen picture D and the lock screen window may be sent to the display module simultaneously or at different time.

Optionally, the lock screen module may alternatively send the identifier of the lock screen window to the display module.

S808: The display module obtains the lock screen window based on the identifier of the lock screen window, and displays the lock screen picture D in the lock screen window.

After obtaining the identifier of the lock screen window and the lock screen picture D, the display module may obtain the lock screen window based on the identifier of the lock screen window, and display the lock screen picture D in the lock screen window.

S809: The lock screen module determines a size 3 of the camera application window.

Optionally, the lock screen module may determine the size 3 of the camera application window based on the distance between the display position 5 and the position 1.

S810: The lock screen module sends the size 3 and the display position 5 of the camera application window to the window management module.

Optionally, the size 3 and the display position 5 of the camera application window may alternatively be separately sent to the window management module.

The size 3 of the camera application window is used for the camera application window to scale the camera application window, to obtain a camera application window of the size 3. The display position 5 is used to determine a display position of the camera application window of the size 2.

S811: The window management module changes a size of the camera application window to the size 3.

After receiving the size 3 of the camera application window that is sent by the lock screen module, the window management module may scale the camera application window based on the size 3, to obtain the camera application window of the size 3.

S812: The window management module sends the display position 5 of the camera application window to the display module.

After obtaining the display position 5, the window management module may send the display position 5 to the display module. The display position 5 is used for the display module to determine the display position of the camera application window of the size 3.

Optionally, S812 may alternatively be performed by the window management module.

S813: The camera application draws a camera preview picture C based on an image frame captured by a camera.

For example, if the display position 5 is the position J shown in FIG. 8B, the camera preview picture C may be the camera preview picture 8101 shown in FIG. 8B.

S814: The camera application sends the camera preview picture C to the display module.

After obtaining the camera preview picture C, the camera application may send the camera preview picture C to the display module.

S815: The display module obtains the camera application window based on an identifier of the camera application window, and displays the camera application window above a lock screen window based on the display position 5.

The display module may obtain the camera application window based on the identifier of the camera application window, and display the camera application window above the lock screen window based on the display position 5.

S816: The display module displays the camera preview picture C in the camera application window of the size 3.

After receiving the camera preview picture C, the display module may display the camera preview picture C in the camera application window of the size 3.

Optionally, S816 may alternatively be performed before or simultaneously with S815.

For example, with regard to the descriptions in S809 to S816, after the electronic device 100 enters the lock-screen state, when the electronic device 100 receives the operation of sliding, by the user, the application window of the camera application in the second direction on the lock screen interface and continues to display the application window, the display position of the camera application window moves with a position of a finger of the user, and the camera application window of the camera application, the lock screen window of the lock screen module, a desktop window of a desktop application, and a wallpaper window of a wallpaper application exist on the electronic device 100.

As shown in FIG. 8E, before the user unlocks the electronic device 100 or releases the finger, the electronic device 100 continues to display the camera application window above the lock screen window. In this case, the camera application window is located at an upper layer of the lock screen window, the lock screen window is located at an upper layer of the desktop window, and the desktop window is still located at an upper layer of the wallpaper window.

For example, with regard to the descriptions in S805 to S808, after the electronic device 100 enters the lock-screen state, when the electronic device 100 receives the operation of sliding, by the user, the application window of the camera application in the second direction on the lock screen interface and stops displaying the camera application window, the camera application window is invisible, and the lock screen window of the lock screen module, a desktop window of a desktop application, and a wallpaper window of a wallpaper application exist on the electronic device 100. Optionally, the camera application window may alternatively exist or not exist on the electronic device 100.

As shown in FIG. 8F, the camera application window may alternatively exist on the electronic device 100. Before the user unlocks the electronic device 100 or releases a finger, the lock screen window is displayed above the camera application window, the camera application window is located at an upper layer of the desktop window, and the desktop window is still located at an upper layer of the wallpaper window. Optionally, the camera application window may alternatively be located at a lower layer of the wallpaper window.

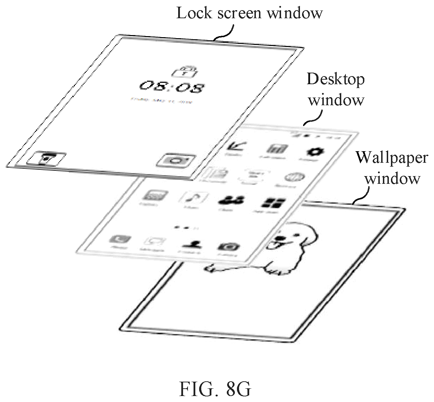

As shown in FIG. 8G, the camera application window may alternatively not exist on the electronic device 100. Before the user unlocks the electronic device 100 or releases a finger, the lock screen window is displayed at an upper layer of the desktop window, and the desktop window is still located at an upper layer of the wallpaper window.

**Scenario 6: A user unlocks an electronic device 100, and the electronic device 100 displays an application window of a first application in full screen.**

**For example, the first application may be a camera application.**

In some embodiments, after the electronic device 100 displays a camera application window, if a user performs an unlock operation, the electronic device 100 may display the camera application window of the camera application in full screen.

Optionally, alternatively, after the electronic device 100 displays a camera application window in full screen, if a user performs an unlock operation, the electronic device 100 may continue to display the camera application window of the camera application in full screen.

Optionally, alternatively, when the electronic device 100 does not display a camera application window in full screen, if a user performs an unlock operation, the electronic device 100 may switch to displaying the camera application window of the camera application in full screen.

FIG. 9A is a schematic flowchart of a method for displaying, by an electronic device 100, an application window of a first application in full screen after a user unlocks the electronic device 100 before the electronic device 100 displays a camera application window in full screen.

As shown in FIG. 9A, the electronic device 100 includes but is not limited to a lock screen module, a window management module, a display module, and a camera application.

The method shown in FIG. 9A may include but is not limited to the following steps.

S901: The display module displays a camera application window, where a camera preview picture A is displayed in the camera application window.

Optionally, the camera application window in S901 may be a camera application window that is not displayed in full screen.

For example, the camera application window may alternatively be the camera application window 5200 shown in FIG. 5D. In this case, the camera preview picture A may be the camera preview picture 5201 shown in FIG. 5D.

For example, the camera application window may alternatively be the camera application window 5200 shown in FIG. 5E. In this case, the camera preview picture A may be the camera preview picture 5301 shown in FIG. 5E.

For example, the camera application window may be the camera application window 5200 shown in FIG. 5F. In this case, the camera preview picture A may be the camera preview picture 5401 shown in FIG. 5F.

For example, the camera application window may alternatively be the camera application window 5200 shown in FIG. 5G. In this case, the camera preview picture A may be the camera preview picture 5501 shown in FIG. 5G.

For example, the camera application window may alternatively be the camera application window 5200 shown in FIG. 5H. In this case, the camera preview picture A may be the camera preview picture 5601 shown in FIG. 5H.

S902: During a first slide operation for the camera application window, the lock screen module recognizes an unlock operation of a user.

In some embodiments, before the camera application window is displayed in full screen, in other words, during the first slide operation for the camera application window, the lock screen module may recognize the unlock operation of the user.

Optionally, the user may unlock the electronic device in one or more of the following manners: a fingerprint (for example, a fingerprint based on a side button), a face image, a voiceprint, a password, and the like.

After the user performs the unlock operation, the lock screen module may recognize the unlock operation of the user.

S903: The lock screen module sends a message about the unlock operation to the window management module.

S904: The window management module sends a message about the unlock operation to the display module.

S905: The display module stops displaying a lock screen window.

After recognizing the unlock operation of the user, the lock screen module may send the message about the unlock operation to the window management module, and then the window management module sends the message about the unlock operation to the display module.

Optionally, the lock screen module may alternatively directly send a message about the unlock operation to the window management module.

In response to the message about the unlock operation, the display module stops displaying the lock screen window.

Optionally, after recognizing the unlock operation of the user, the lock screen module may send the message about the unlock operation to the window management module. In response to the message about the unlock operation, the window management module may destroy the lock screen window, so that no lock screen window exists on the electronic device 100 after the electronic device 100 is unlocked.

S906: In response to the unlock operation, the lock screen module determines a size 4 of the camera application window, where the size 4 is a full-screen size.

S907: The lock screen module sends the size 4 of the camera application window to the window management module.

In response to the unlock operation, the lock screen module may determine the size 4 of the camera application window, where the size 4 is a full-screen size.

After obtaining the size 4 of the camera application window, the lock screen module sends the size 4 of the camera application window to the window management module.

Optionally, in addition to being performed after S902, S903 to S905 may alternatively be performed before, after, or simultaneously with any step before S912.

S908: The window management module changes a size of the camera application window to the size 4.

After receiving the size 4 of the camera application window that is sent by the lock screen module, the window management module may change the size of the camera application window to the size 4.

For example, a camera application window of the size 4 may be the camera application window 5200 shown in FIG. 5I.

S909: The camera application draws a camera preview picture D based on an image frame captured by a camera.

For example, the camera preview picture D may be the camera preview picture 5701 shown in FIG. 5I.

S910: The camera application sends the camera preview picture D to the display module.

When the camera application is started, the camera application may invoke image content captured by the camera of the electronic device 100 to draw a camera preview picture, for example, the camera preview picture D, and send the camera preview picture D to the display module.

S911: The display module obtains the camera application window based on an identifier of the camera application window, and displays the camera application window in full screen.

After receiving the identifier of the camera application window that is sent by the camera application, the display module may obtain the camera application window based on the identifier of the camera application window, and display the camera application window in full screen.

S912: The display module displays the camera preview picture D in the camera application window of the size 4.

After receiving the camera preview picture D, the display module may display the camera preview picture D in the camera application window of the size 4, in other words, display the camera preview picture D in the camera application window that is displayed in full screen.

Optionally, S912 may alternatively be performed before or simultaneously with S911.

After the electronic device 100 displays the camera application window and before the electronic device 100 displays the camera application window in full screen, in other words, during the first slide operation for the camera application window, if the user performs an unlock operation, the electronic device 100 may switch to displaying the camera application window in full screen.

Optionally, before the electronic device 100 switches to displaying the camera application window in full screen, the electronic device 100 may control the size of the camera application window to gradually increase to full screen, to implement natural transition to displaying the camera application window in full screen.

Image content displayed in one or more transition image frames may be image content captured by the camera in real time. For example, the one or more transition image frames may be the camera preview picture 5401 shown in FIG. 5F, the camera preview picture 5501 shown in FIG. 5G, and the camera preview picture 5601 shown in FIG. 5H.

FIG. 9B is a diagram of display layers of application windows on an electronic device 100 after a user unlocks the electronic device 100 and the electronic device 100 displays an application window of a first application in full screen.

For example, a camera application window may be the camera application window 5200 shown in FIG. 5I.

After the user unlocks the electronic device 100, the electronic device 100 may destroy a lock screen window. The camera application window of a camera application, a desktop window of a lock desktop application, and a wallpaper window of a wallpaper application exist on the electronic device 100.

As shown in FIG. 9B, the electronic device 100 displays the camera application window in the foreground, the camera application window is located at an upper layer of the desktop window, and the desktop window is still located at an upper layer of the wallpaper window.

Optionally, a lock screen window may alternatively exist on the electronic device 100, and the lock screen window may be located at a lower layer of the wallpaper window.

FIG. 9C is a schematic flowchart of a method for displaying, by an electronic device 100, an application window of a first application in full screen after a user unlocks the electronic device 100 after the electronic device 100 displays a camera application window in full screen.

As shown in FIG. 9C, the electronic device 100 includes but is not limited to a lock screen module, a window management module, a display module, and a camera application.

The method shown in FIG. 9C may include but is not limited to the following steps.

S901C: The display module displays a camera application window in full screen, where a camera preview picture is displayed in the camera application window.

Optionally, the camera application window in S901C may be a camera application window displayed in full screen.

For example, the camera application window may alternatively be the camera application window 5200 shown in FIG. 5I. In this case, the camera preview picture may be the camera preview picture 5701 shown in FIG. 5I.

S902C: The lock screen module recognizes an unlock operation of a user.

In some embodiments, after the camera application window is displayed in full screen, in other words, after a first slide operation for the camera application window is ended, the lock screen module may recognize the unlock operation of the user.

Optionally, the user may unlock the electronic device in one or more of the following manners: a fingerprint (for example, a fingerprint based on a side button), a face image, a voiceprint, a password, and the like.

After the user performs the unlock operation, the lock screen module may recognize the unlock operation of the user.

S903C: The lock screen module sends a message about the unlock operation to the window management module.

S904C: The window management module sends a message about the unlock operation to the display module.

S905C: The display module stops displaying a lock screen window.

After recognizing the unlock operation of the user, the lock screen module may send the message about the unlock operation to the window management module, and then the window management module sends the message about the unlock operation to the display module.

Optionally, the lock screen module may alternatively directly send a message about the unlock operation to the window management module.

In response to the message about the unlock operation, the display module stops displaying the lock screen window.

Optionally, after recognizing the unlock operation of the user, the lock screen module may send the message about the unlock operation to the window management module. In response to the message about the unlock operation, the window management module may destroy the lock screen window, so that no lock screen window exists on the electronic device 100 after the electronic device 100 is unlocked.

That the window management module destroys the lock screen window may mean that the lock screen window does not exist on the electronic device 100.

S906C: The display module continues to display the camera application window in full screen, where a camera preview picture is displayed in the camera application window.

After the camera application window is displayed in full screen, if the user performs an unlock operation, the electronic device 100 may destroy the lock screen window, and stop displaying the lock screen window. Because the camera application window and the lock screen window are two independent windows, after the lock screen window is destroyed, the camera application window still exists on the electronic device 100. The electronic device 100 may continue to display the camera application window in full screen, and display the camera preview picture in the camera application window.

Optionally, the camera preview picture may change in real time.

For a relationship between display layers of application windows on the electronic device 100, refer to the descriptions in the embodiment of FIG. 9B.

Scenario 7: When an electronic device 100 is in a lock-screen state and the electronic device 100 displays a camera application window above a lock screen window, if a first slide operation is ended, the electronic device 100 may display an application window of a first application in full screen.

For example, the first application may be a camera application.

When the electronic device 100 is in the lock-screen state and the electronic device 100 displays the camera application window above the lock screen window, if a user ends the first slide operation, for example, the user releases a finger, the electronic device 100 displays the application window of the first application in full screen.

FIG. 10A is a schematic flowchart of a method for displaying, by an electronic device 100, an application window of a first application in full screen after a user ends a first slide operation when the electronic device 100 is in a lock-screen state.

As shown in FIG. 10A, the electronic device 100 includes but is not limited to a lock screen module, a window management module, a display module, and a camera application.

The method shown in FIG. 10A may include but is not limited to the following steps.

S1001: The display module displays a camera application window, where a camera preview picture A is displayed in the camera application window.

Before displaying the camera application window in full screen, the electronic device 100 may receive a first slide operation of a user for the camera application window, and change a display position of the camera application window on a display, or change a size of the camera application window, to achieve responsiveness.

Optionally, the camera application window in S901 may be a camera application window that is not displayed in full screen.

For example, the camera application window may alternatively be the camera application window 5200 shown in FIG. 5D. In this case, the camera preview picture A may be the camera preview picture 5201 shown in FIG. 5D.

For example, the camera application window may alternatively be the camera application window 5200 shown in FIG. 5E. In this case, the camera preview picture A may be the camera preview picture 5301 shown in FIG. 5E.

For example, the camera application window may be the camera application window 5200 shown in FIG. 5F. In this case, the camera preview picture A may be the camera preview picture 5401 shown in FIG. 5F.

For example, the camera application window may alternatively be the camera application window 5200 shown in FIG. 5G. In this case, the camera preview picture A may be the camera preview picture 5501 shown in FIG. 5G.

For example, the camera application window may alternatively be the camera application window 5200 shown in FIG. 5H. In this case, the camera preview picture A may be the camera preview picture 5601 shown in FIG. 5H.

S1002: The lock screen module recognizes that the user stops the first slide operation for the camera application window.

If the user stops the first slide operation for the camera application window, for example, releases a finger, the lock screen module may recognize that the user stops the first slide operation for the camera application window.

S1003: In response to stopping the first slide operation for the camera application window, the lock screen module determines a size 4 of the camera application window, where the size 4 is a full-screen size.

After recognizing that the user stops the first slide operation for the camera application window, the electronic device 100 may determine to switch to displaying the camera application window in full screen. The lock screen module may determine the size 4 of the camera application window, where the size 4 is a full-screen size.

S1004: The lock screen module sends the size 4 of the camera application window to the window management module.

In response to stopping the first slide operation for the camera application window, the lock screen module may determine the size 4 of the camera application window, where the size 4 is a full-screen size.

After obtaining the size 4 of the camera application window, the lock screen module sends the size 4 of the camera application window to the window management module.

S1005: The window management module changes the size of the camera application window to the size 4.

After receiving the size 4 of the camera application window that is sent by the lock screen module, the window management module may scale the camera application window based on the size 4, to obtain a camera application window of the size 4.

For example, the camera application window may be the camera application window 5200 shown in FIG. 5I.

S1006: The camera application draws a camera preview picture E based on an image frame captured by a camera.

For example, the camera preview picture E may be the camera preview picture 5701 shown in FIG. 5I.

S1007: The camera application sends the camera preview picture E to the display module.

When the camera application is started, the camera application may invoke image content captured by the camera of the electronic device 100 to draw a camera preview picture, for example, the camera preview picture E, and send the camera preview picture E to the display module.

S1008: The display module obtains the camera application window based on an identifier of the camera application window, and displays the camera application window in full screen.

The display module may obtain the camera application window based on the identifier of the camera application window, and display the camera application window in full screen.

S1009: The display module displays the camera preview picture E in the camera application window of the size 4.

After receiving the camera preview picture E, the display module may display the camera preview picture E in the camera application window of the size 4.

Optionally, S1009 may alternatively be performed before or simultaneously with S1008.

Optionally, before the electronic device 100 switches to displaying the camera application window in full screen, the electronic device 100 may control the size of the camera application window to gradually increase to full screen, to implement natural transition to displaying the camera application window in full screen.

Image content displayed in one or more transition image frames may be image content captured by the camera in real time. For example, the one or more transition image frames may be the camera preview picture 5401 shown in FIG. 5F, the camera preview picture 5501 shown in FIG. 5G, and the camera preview picture 5601 shown in FIG. 5H.

FIG. 10B is a diagram of display layers of application windows on an electronic device 100 after the electronic device 100 displays an application window of a first application in full screen when the electronic device 100 recognizes that a user stops a first slide operation for a camera application window.

For example, the camera application window may be the camera application window 5200 shown in FIG. 5I.

The camera application window of a camera application, a lock screen window, a desktop window of a lock desktop application, and a wallpaper window of a wallpaper application exist on the electronic device 100.

As shown in FIG. 10B, the camera application window of the camera application is displayed at an upper layer of the lock screen window, the lock screen window is displayed at an upper layer of the desktop window, and the desktop window is still located at an upper layer of the wallpaper window.

**Scenario 8: When an electronic device 100 is in a lock-screen state, after the electronic device 100 displays an application window of a first application in full screen, if the electronic device 100 receives a user operation and exits the first application, the electronic device 100 may display a lock screen window in full screen.**

For example, the first application may be a camera application.

After the electronic device 100 displays an application window of the camera application in full screen, if the electronic device 100 receives a user operation and exits the camera application, the electronic device 100 may display the lock screen window in full screen.

FIG. 11A and FIG. 11B are diagrams of a group of UIs on which an electronic device 100 receives a user operation and exits a camera application and the electronic device 100 displays a lock screen window in full screen.

For example, as shown in FIG. 11A, the electronic device 100 displays a camera application window 5200 in full screen, and a camera preview picture 5701 is displayed in the camera application window 5200.

The camera application window 5200 shown in FIG. 11A may be displayed when the electronic device 100 is in a lock-screen state.

The electronic device 100 may receive a user operation to stop displaying the camera application window 5200.

For example, as shown in FIG. 11A and FIG. 11B, the electronic device 100 may receive an operation of a user for the camera application window 5200, for example, a slide-up operation performed at the bottom of a display. In response to the user operation, the electronic device 100 may stop displaying the camera application window 5200, and display a lock screen window shown in FIG. 11B. A lock screen picture 4102 is displayed in the lock screen window shown in FIG. 11B.

Optionally, in addition to the slide-up operation performed at the bottom of the display, the user may alternatively perform another operation to enable the electronic device 100 to stop displaying the camera application window 5200. A specific implementation of an operation of stopping displaying the camera application window 5200 is not limited in this application.

FIG. 11C is a schematic flowchart of a method for receiving, by an electronic device 100, a user operation and exiting a camera application and displaying, by the electronic device 100, a lock screen window in full screen.

Optionally, FIG. 11C may be a process, in the method shown in FIG. 10A, in which an electronic device 100 stops displaying a camera application window after displaying the camera application window in full screen when the electronic device 100 is in a lock-screen state.

S1101A: A display module displays a camera application window in full screen, where a camera preview picture E is displayed in the camera application window.

For example, the camera application window may be the camera application window 5200 shown in FIG. 11A, and the camera preview picture E may be the camera preview picture 5701 shown in FIG. 11A.

S1102A: A lock screen module recognizes an operation of stopping displaying the camera application window.

The electronic device 100 may receive a user operation to stop displaying the camera application window 5200. After receiving the operation of stopping displaying the camera application window, the lock screen module may recognize the operation of stopping displaying the camera application window.

For example, the operation of stopping displaying the camera application window 5200 may be a slide-up operation performed at the bottom of a display.

S1103A: The lock screen module obtains lock screen content A in response to the operation of stopping displaying the camera application window.

The lock screen module may obtain the lock screen content A in response to the operation of stopping displaying the camera application window.

For example, the lock screen content A may be the lock screen picture 4102 shown in FIG. 11B.

S1104A: The lock screen module draws a lock screen picture A based on the lock screen content A.

After obtaining the lock screen content A, the lock screen module draws the lock screen picture A.

S1105A: The lock screen module sends the lock screen picture A to the display module.

S1106A: The display module obtains a lock screen window based on an identifier of the lock screen window, and displays the lock screen picture A in the lock screen window.

After obtaining the lock screen picture A, the lock screen module may send the lock screen picture A and the identifier of the lock screen window to the display module.

After obtaining the lock screen picture A, the display module may obtain the lock screen window based on the identifier of the lock screen window, and display the lock screen picture A in the lock screen window.

Optionally, the lock screen module may alternatively send the identifier of the lock screen window to the display module.

FIG. 11D is a diagram of display layers of application windows on an electronic device 100 after the electronic device 100 receives a user operation, exits a camera application, and displays a lock screen window in full screen when the electronic device 100 is in a lock-screen state.

When the electronic device 100 is in the lock-screen state, after the electronic device 100 receives the user operation, exits the camera application, and displays the lock screen window in full screen, the lock screen window, a desktop window of a desktop application, and a wallpaper window of a wallpaper application exist on the electronic device 100. As shown in FIG. 11D, the lock screen window is located above the desktop window, and the desktop window is located at an upper layer of the wallpaper window.

FIG. 11E is another diagram of display layers of application windows on an electronic device 100 after the electronic device 100 receives a user operation, exits a camera application, and displays a lock screen window in full screen when the electronic device 100 is in a lock-screen state.

When the electronic device 100 is in the lock-screen state, after the electronic device 100 receives the user operation, exits the camera application, and displays the lock screen window in full screen, the lock screen window, a camera application window, a desktop window of a desktop application, and a wallpaper window of a wallpaper application exist on the electronic device 100. As shown in FIG. 11E, the lock screen window is located above the camera application window, the camera application window is located above the desktop window, and the desktop window is located at an upper layer of the wallpaper window.

Optionally, the camera application window may alternatively be located below the wallpaper window.

Scenario 9: When an electronic device 100 is in an unlocked state, after the electronic device 100 displays an application window of a first application in full screen, if the electronic device 100 receives a user operation and exits the first application, the electronic device 100 may display a desktop.

FIG. 11F and FIG. 11G are diagrams of another group of UIs on which an electronic device 100 receives a user operation and exits a camera application and the electronic device 100 displays a desktop window in full screen.

For example, as shown in FIG. 11F, the electronic device 100 displays a camera application window 5200 in full screen, and a camera preview picture 5701 is displayed in the camera application window 5200.

The camera application window 5200 shown in FIG. 11F may be displayed when the electronic device 100 is in an unlocked state.

The electronic device 100 may receive a user operation to stop displaying the camera application window 5200.

For example, as shown in FIG. 11F and FIG. 11G, the electronic device 100 may receive an operation of a user for the camera application window 5200, for example, a slide-up operation performed at the bottom of a display. In response to the user operation, the electronic device 100 may stop displaying the camera application window 5200, and display a desktop window shown in FIG. 11G. A desktop is displayed in the desktop window.

Optionally, in addition to the slide-up operation performed at the bottom of the display, the user may alternatively perform another operation to enable the electronic device 100 to stop displaying the camera application window 5200. A specific implementation of an operation of stopping displaying the camera application window 5200 is not limited in this application.

FIG. 11H is a schematic flowchart of another method for receiving, by an electronic device 100, a user operation and exiting a camera application and displaying, by the electronic device 100, a desktop window in full screen.

Optionally, FIG. 11H may be a process, in the method shown in FIG. 9A or FIG. 9C, in which an electronic device 100 stops displaying a camera application window after displaying the camera application window in full screen when the electronic device 100 is in an unlocked state.

S1101B: A display module displays a camera application window in full screen, where a camera preview picture E is displayed in the camera application window.

For example, the camera application window may be the camera application window 5200 shown in FIG. 11F, and the camera preview picture E may be the camera preview picture 5701 shown in FIG. 11F.

S1102B: A lock screen module recognizes an operation of stopping displaying the camera application window.

The electronic device 100 may receive a user operation to stop displaying the camera application window 5200. After receiving the operation of stopping displaying the camera application window, the lock screen module may recognize the operation of stopping displaying the camera application window.

For example, the operation of stopping displaying the camera application window 5200 may be a slide-up operation performed at the bottom of a display.

S1103B: The lock screen module obtains desktop content in response to the operation of stopping displaying the camera application window.

The lock screen module may obtain the desktop content in response to the operation of stopping displaying the camera application window.

For example, the desktop content may be desktop content shown in FIG. 11G.

S1104B: The lock screen module draws a desktop based on the desktop content.

After obtaining the desktop content, the lock screen module draws the desktop.

S1105B: The lock screen module sends the desktop to the display module.

Optionally, the lock screen module may alternatively send an identifier of a desktop window to the display module.

S1106B: The display module obtains the desktop window based on the identifier of the desktop window, and displays the desktop in the desktop window.

After obtaining the desktop, the lock screen module may send the desktop and the identifier of the desktop window to the display module.

After obtaining the desktop and the identifier of the desktop window, the display module may obtain the desktop window based on the identifier of the desktop window, and display the desktop in the desktop window.

FIG. 11I is a diagram of display layers of application windows on an electronic device 100 after the electronic device 100 receives a user operation, exits a camera application, and displays a desktop window in full screen when the electronic device 100 is in an unlocked state.

When the electronic device 100 is in the unlocked state, after the electronic device 100 receives the user operation, exits the camera application, and displays the desktop window in full screen, the desktop window of a desktop application and a wallpaper window of a wallpaper application exist on the electronic device 100. As shown in FIG. 11I, the desktop window is located at an upper layer of the wallpaper window.

FIG. 11J is another diagram of display layers of application windows on an electronic device 100 after the electronic device 100 receives a user operation, exits a camera application, and displays a desktop window in full screen when the electronic device 100 is in a lock-screen state.

When the electronic device 100 is in the lock-screen state, after the electronic device 100 receives the user operation, exits the camera application, and displays the desktop window in full screen, a camera application window, the desktop window of a desktop application, and a wallpaper window of a wallpaper application exist on the electronic device 100. As shown in FIG. 11J, the desktop window is located at an upper layer of the wallpaper window, and the wallpaper window is located at an upper layer of the camera application window.

FIG. 12 is a schematic flowchart of a method for starting an application in a lock-screen state according to this application.

S1201: An electronic device displays a first lock screen picture, where the first lock screen picture includes a first icon of a first application.

S1202: The electronic device receives a first slide operation, where the first slide operation is performed on the first icon.

For example, the first application may be a camera application, the first lock screen picture may be the lock screen picture 4102 shown in FIG. 5A, and the first icon may be the icon 4201 of the camera application shown in FIG. 5A.

For example, the first application may be a camera application, the first lock screen picture may be the lock screen picture 5101 shown in FIG. 5B, and the first icon may be the icon 5102 of the camera application shown in FIG. 5B.

For example, the first application may be a camera application, the first lock screen picture may be the lock screen picture 5103 shown in FIG. 5C, and the first icon may be the icon 5104 of the camera application shown in FIG. 5C.

S1203: The electronic device displays a first window of the first application in response to the first slide operation, where picture content in the first application is displayed in the first window.

For example, the first window is the camera application window 5200 shown in FIG. 5D, FIG. 5E, FIG. 5F, FIG. 5G, and FIG. 5H.

In this embodiment of this application, when the first application is the camera application, the camera application window 5200 may also be referred to as the first window.

In addition to the camera application, the first application may alternatively be another application.

For example, when the first application is a payment application, a user may quickly start the payment application in a lock-screen state, with a payment application window displayed. A payment code may be displayed in the payment application window. In this way, the user can quickly show the payment code in the payment application without unlocking, to perform a quick payment operation or the like. This facilitates a user operation.

For example, when the first application is a scan application, a user may quickly start the scan application in a lock-screen state, with a scan application window displayed. A scan page may be displayed in the scan application window. In this way, the user can quickly start the scan application without unlocking, and scan a picture, for example, a two-dimensional code, through the scan application, to perform a quick payment operation or the like. This facilitates a user operation.

For example, when the first application is a notepad application, a user may quickly start the notepad application in a lock-screen state, with a notepad application window displayed. Note content may be displayed in the notepad application window. In this way, the note content of the notepad application can be quickly displayed without unlocking by the user. This facilitates a user operation.

In the method, when the first application is started in the lock-screen state, the electronic device may create the first window of the first application, and display, in the first window of the first application, content in the first application, so that the user previews application content of the first application in advance without unlocking the electronic device.

In a possible implementation, that the electronic device displays the first lock screen picture specifically includes: The electronic device displays the first lock screen picture in a lock screen window. That the electronic device displays the first window of the first application specifically includes: The electronic device displays the first window of the first application above the lock screen window.

In this way, when the first application is quickly started in the lock-screen state, the electronic device may additionally create the first window of the first application. In this way, the first window of the first application and the lock screen window are independent of each other and do not affect each other. When a lock screen application is closed, the first window of the first application still exists.

For example, the lock screen window may be the lock screen window 5100 shown in FIG. 5A, FIG. 5B, or FIG. 5C.

In a possible implementation, that the electronic device displays the first window of the first application in response to the first slide operation specifically includes: The electronic device determines a first slide distance based on the first slide operation performed on the first icon. The electronic device determines whether the first slide distance is greater than a preset distance. If the first slide distance is greater than the preset distance, the electronic device displays the first window of the first application.

Optionally, the first slide distance may be determined based on a distance, in a vertical direction, between an end position and an initial position of the first slide operation performed on the first icon. Optionally, the initial position may be a display position of the first icon.

For example, the display position of the first icon may be a position of a center point of the first icon. The display position of the first icon may alternatively be a display position of another point of the first icon, for example, a display position of any edge of the first icon, a display position of a point inside the first icon, or a display position of a point outside the first icon.

In the method, when a slide distance of the first icon is greater than the preset distance, the electronic device may create and display the first window of the first application.

The method further includes: If the first slide distance is less than the preset distance, the electronic device displays a second lock screen picture, where the second lock screen picture includes a second icon of the first application, and a size of the second icon is greater than a size of the first icon, or a size of the second icon is the same as a size of the first icon.

In the method, when a slide distance of the first icon is less than the preset distance, the electronic device may not create the first window of the first application, but continue to display an icon of the first application, for example, the second icon. The size of the second icon may be the same as or different from the size of the first icon. A display position of the second icon may be the same as or different from the display position of the first icon.

In a possible implementation, the display position of the second icon is different from the display position of the first icon, and the display position of the second icon is determined based on the first slide operation.

Optionally, the display position of the second icon may be determined based on the end position of the first slide operation for the first icon.

In a possible implementation, that the electronic device displays the first window of the first application specifically includes: The electronic device determines a first display position based on the first slide operation. The electronic device displays the first window of the first application based on the first display position.

Optionally, a display position of the first window may be determined based on the end position of the first slide operation for the first icon.

Optionally, that the electronic device displays the first window based on the first display position may mean that the first display position is a display position of a vertex of the first window, or may be a display position of a point on an edge of the first window, or may be a display position of a point inside the first window, or may be a display position of a point outside the first window instead of a display position on the first window or a display position of a point inside the first window. A manner of displaying the first window based on the first display position is not limited in this application.

This can ensure that a display position of the first window varies with a display position of a finger of the user, to achieve responsiveness.

For example, refer to the descriptions in the embodiment of FIG. 5J-1 to FIG. 5J-4.

In a possible implementation, after the electronic device displays the first window of the first application, the method further includes: The electronic device continues to receive the first slide operation, where the first slide operation is performed on the first window. The electronic device determines a second slide distance based on the first slide operation performed on the first window. The electronic device determines whether the second slide distance is greater than the preset distance. If the second slide distance is greater than the preset distance, the electronic device displays the first window of the first application, where picture content in the first application is displayed in the first window.

After the electronic device creates and displays the first window of the first application, the user may continue to perform the first slide operation on the first window.

Optionally, a slide direction of the first slide operation for the first window may be the same as a slide direction of the first slide operation for the first icon, or may be opposite to a slide direction of the first slide operation for the first icon.

Optionally, the second slide distance may be based on a distance, in the vertical direction, between an end position and an initial position of the first slide operation for the first window.

Optionally, a slide direction of the first slide operation for the first window may be the same as or different from a slide direction of the first slide operation for the first icon.

In the method, when the second slide distance of the first slide operation for the first window is greater than the preset distance, the electronic device may continue to display the first window of the first application. Before and after the first slide operation for the first window is received, a size of the first window may remain the same or vary, and a display position of the first window may remain the same or vary.

For example, when the slide direction of the first slide operation for the first window is the same as the slide direction of the first slide operation for the first icon, for example, both are a first direction, refer to the descriptions in the embodiments of FIG. 6A-1, FIG. 6A-2, and FIG. 6B.

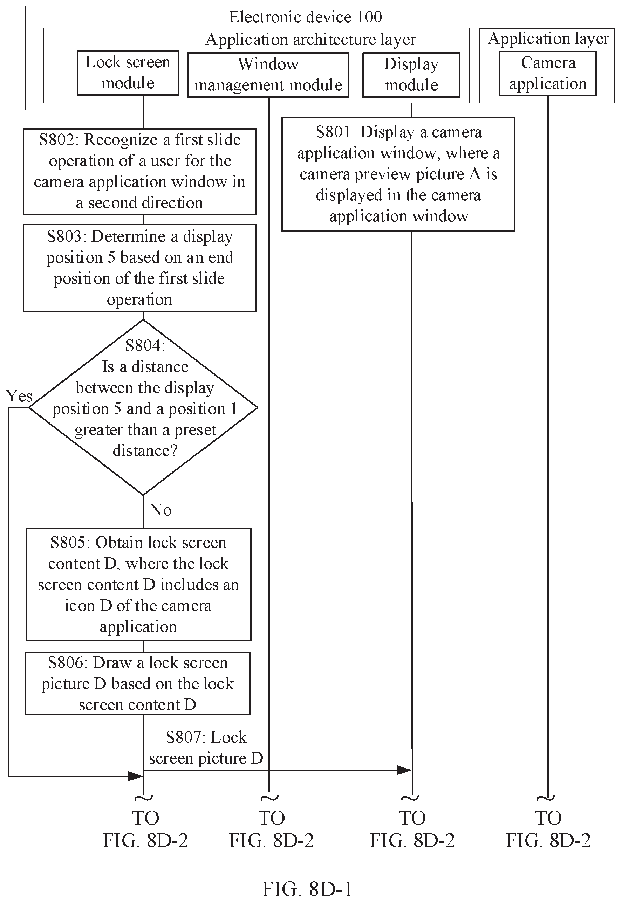

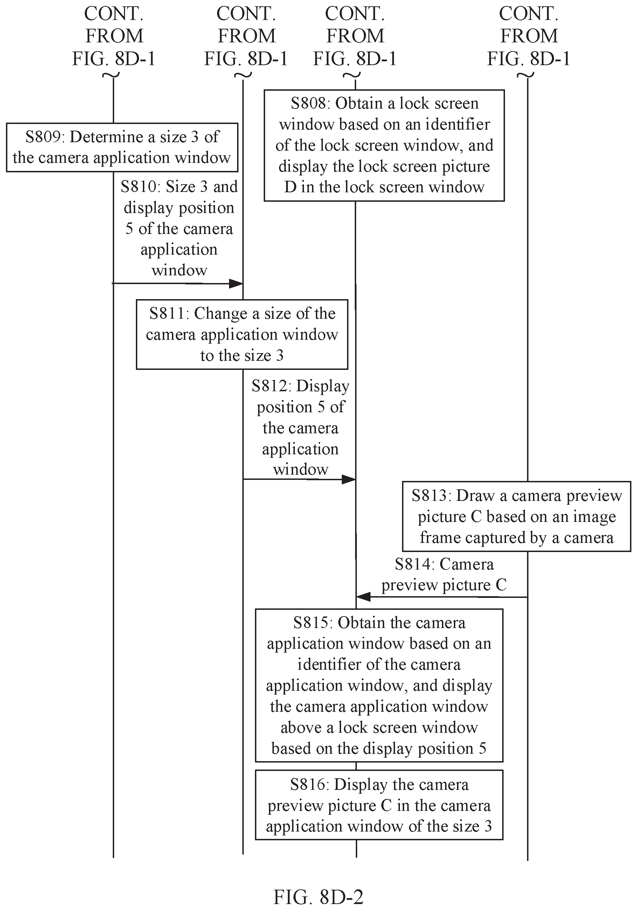

For example, when the slide direction of the first slide operation for the first window is different from the slide direction of the first slide operation for the first icon, for example, the slide direction of the first slide operation for the first window is a first direction, the slide direction of the first slide operation for the first icon is a second direction, and the first direction is opposite to the second direction, refer to descriptions in the embodiments of FIG. 8D-1 to FIG. 8G.

In a possible implementation, if the second slide distance is greater than the first slide distance, a size of the first window of the first application increases; or
if the second slide distance is less than the first slide distance, a size of the first window of the first application decreases.

In this way, the size of the first window may vary with a slide distance, to achieve responsiveness.

In a possible implementation, after the electronic device displays the first window of the first application, the method further includes: The electronic device receives an unlock operation of a user. The electronic device displays the first window of the first application in full screen in response to the unlock operation, where picture content in the first application is displayed in the first window.

Optionally, the electronic device 100 may display the first window of the first application in full screen, or the electronic device 100 may not display the first window of the first application in full screen. Then the electronic device may receive the unlock operation of the user. Because the first window of the first application and the lock screen window are independent of each other, a display status of the first window of the first application is not affected by the lock screen window. Therefore, after unlocking, when the lock screen window is destroyed, the electronic device 100 may still continue to display the first window of the first application.

For example, if the unlock operation is performed after the electronic device 100 displays the first window of the first application in full screen, refer to the descriptions in the embodiment of FIG. 9C.

For example, if the unlock operation is performed before the electronic device 100 displays the first window of the first application in full screen, refer to the descriptions in the embodiments of FIG. 9A and FIG. 9B.

In a possible implementation, the electronic device destroys the lock screen window.

In this way, after the unlock operation is performed, the electronic device may destroy the lock screen window. To be specific, the lock screen application on the electronic device is closed, and no lock screen window exists on the electronic device. When the electronic device enters the lock-screen state again, the electronic device starts the lock screen application again, and creates and displays a lock screen window.

In a possible implementation, after the electronic device displays the first window of a first application, the method further includes: After detecting that the first slide operation ends, the electronic device displays the first window of the first application in full screen, where picture content in the first application is displayed in the first window.

In this way, after the user stops an operation for the first window, to be specific, stops the first slide operation for the first window, for example, the user releases the finger, the electronic device may automatically display the first window of the first application in full screen.

In a possible implementation, the first window of the first application is located at an upper layer of the lock screen window.

In this way, after the user stops an operation for the first window, to be specific, stops the first slide operation for the first window, for example, the user releases the finger, the lock screen window still exists on the electronic device, and the first window is located at the upper layer of the lock screen window.

For example, refer to the descriptions in the embodiments of FIG. 10A and FIG. 10B.

In a possible implementation, before the electronic device displays the first window of the first application in full screen, the method further includes: The electronic device gradually enlarges the first window of the first application until the first window of the first application is displayed in full screen.

In this way, after the user stops an operation for the first window, to be specific, stops the first slide operation for the first window, or after the user performs the unlock operation, the first window may be gradually enlarged, to naturally switch to full-screen display.

In a possible implementation, after the electronic device displays the first window of the first application in full screen, the method further includes: The electronic device receives an operation of a user for the first window of the first application. The electronic device displays the lock screen window in response to receiving the operation of the user for the first window of the first application, where the first lock screen picture is displayed in the lock screen window.

In this way, when the electronic device is in the lock-screen state, after the electronic device displays the first window in full screen, if the electronic device may receive a user operation to stop displaying the first window, the electronic device may continue to display the lock screen window in full screen.

In a possible implementation, after the electronic device displays the lock screen window, the method further includes: The electronic device destroys the first window of the first application, or displays the first window of the first application at a lower layer of the lock screen window.

Optionally, the first window may be destroyed or continue to exist on the electronic device. When the first window continues to exist on the electronic device, the lock screen window is located at an upper layer of the first window.

For example, refer to the descriptions in the embodiments of FIG. 11A to FIG. 11E.

In a possible implementation, when the electronic device is in an unlocked state, after the electronic device displays the first window in full screen, if the electronic device may receive a user operation to stop displaying the first window, the electronic device may display a desktop. In this case, a desktop window is located at an upper layer of the first window.

For example, refer to the descriptions in the embodiments of FIG. 11F to FIG. 11J.

This application provides an electronic device. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method for starting an application in a lock-screen state shown in FIG. 12.

This application provides a computer-readable storage medium, including instructions. When the instructions are run on an electronic device, the electronic device is enabled to perform the method for starting an application in a lock-screen state shown in FIG. 12.

This application provides a computer program product. The computer program product may include computer instructions. When the computer instructions are run on an electronic device, the electronic device is enabled to perform the method for starting an application in a lock-screen state shown in FIG. 12.

This application provides a chip. The chip is used in an electronic device. The chip includes one or more processors. The processor is configured to invoke computer instructions, to enable the electronic device to perform the method for starting an application in a lock-screen state shown in FIG. 12.

Some steps in the foregoing embodiments may be replaced with other methods in the art that are capable of achieving the same effects, or a specific step in the foregoing embodiments may be omitted on the premise that a long-screenshot function can be implemented.

Implementations of this application may be combined in any manner to achieve different technical effects.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or the functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art can understand that all or some of the processes of the methods in the foregoing embodiments may be implemented by a computer program instructing related hardware. The program may be stored in a computer-readable storage medium. When the program is executed, the processes of the foregoing method embodiments are performed. The foregoing storage medium includes any medium that can store program code, for example, a ROM, a random access memory RAM, a magnetic disk, or a compact disc.

To sum up, the foregoing descriptions are merely embodiments of the technical solutions of this application, but are not intended to limit the protection scope of this application. Any modification, equivalent replacement, improvement, or the like made based on the disclosure of this application shall fall within the protection scope of this application.

## Claims

1. A method for starting an application in a lock-screen state, wherein the method comprises:
displaying, by an electronic device, a first lock screen picture, wherein the first lock screen picture comprises a first icon of a first application;
receiving, by the electronic device, a first slide operation, wherein the first slide operation is performed on the first icon; and
displaying, by the electronic device, a first window of the first application in response to the first slide operation, wherein picture content in the first application is displayed in the first window.

2. The method according to claim 1, wherein displaying, by the electronic device, the first lock screen picture specifically comprises:
displaying, by the electronic device, the first lock screen picture in the lock screen window; and
displaying, by the electronic device, the first window of the first application specifically comprises:
displaying, by the electronic device, the first window of the first application above the lock screen window.

3. The method according to claim 1 or 2, wherein displaying, by the electronic device, the first window of the first application in response to the first slide operation specifically comprises:
determining, by the electronic device, a first slide distance based on the first slide operation performed on the first icon;
determining, by the electronic device, whether the first slide distance is greater than a preset distance; and
if the first slide distance is greater than the preset distance, displaying, by the electronic device, the first window of the first application.

4. The method according to claim 3, wherein the method further comprises:
if the first slide distance is less than the preset distance, displaying, by the electronic device, a second lock screen picture, wherein the second lock screen picture comprises a second icon of the first application, and a size of the second icon is greater than a size of the first icon, or a size of the second icon is the same as a size of the first icon.

5. The method according to claim 4, wherein a display position of the second icon is different from a display position of the first icon, and the display position of the second icon is determined based on the first slide operation.

6. The method according to any one of claims 1 to 5, wherein displaying, by the electronic device, the first window of the first application specifically comprises:
determining, by the electronic device, a first display position based on the first slide operation; and
displaying, by the electronic device, the first window of the first application based on the first display position.

7. The method according to any one of claims 1 to 6, wherein after displaying, by the electronic device, the first window of the first application, the method further comprises:
continuing, by the electronic device, to receive the first slide operation, wherein the first slide operation is performed on the first window;
determining, by the electronic device, a second slide distance based on the first slide operation performed on the first window;
determining, by the electronic device, whether the second slide distance is greater than the preset distance; and
if the second slide distance is greater than the preset distance, displaying, by the electronic device, the first window of the first application, wherein picture content in the first application is displayed in the first window.

8. The method according to claim 7, wherein if the second slide distance is greater than the first slide distance, a size of the first window of the first application increases; or
if the second slide distance is less than the first slide distance, a size of the first window of the first application decreases.

9. The method according to any one of claims 1 to 8, wherein after displaying, by the electronic device, the first window of the first application, the method further comprises:
receiving, by the electronic device, an unlock operation of a user; and
displaying, by the electronic device, the first window of the first application in full screen in response to the unlock operation, wherein picture content in the first application is displayed in the first window.

10. The method according to claim 9, wherein the electronic device destroys the lock screen window.

11. The method according to claim 7 or 8, wherein after displaying, by the electronic device, the first window of the first application, the method further comprises:
after detecting that the first slide operation ends, displaying, by the electronic device, the first window of the first application in full screen, wherein picture content in the first application is displayed in the first window.

12. The method according to claim 11, wherein the first window of the first application is located at an upper layer of the lock screen window.

13. The method according to any one of claims 9 to 12, wherein before displaying, by the electronic device, the first window of the first application in full screen, the method further comprises:
gradually enlarging, by the electronic device, the first window of the first application until the first window of the first application is displayed in full screen.

14. The method according to claim 11 or 12, wherein after displaying, by the electronic device, the first window of the first application in full screen, the method further comprises:
receiving, by the electronic device, an operation of a user for the first window of the first application; and
displaying, by the electronic device, the lock screen window in response to receiving the operation of the user for the first window of the first application, wherein the first lock screen picture is displayed in the lock screen window.

15. The method according to claim 14, wherein after displaying, by the electronic device, the lock screen window, the method further comprises:
destroying, by the electronic device, the first window of the first application, or displaying the first window of the first application at a lower layer of the lock screen window.

16. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 15.

17. A computer-readable storage medium, comprising computer instructions, wherein when the computer instructions are run on an electronic device, the electronic device is enabled to perform the method according to any one of claims 1 to 15.
